# EUROPEAN PATENT SPECIFICATION

(11) **EP 4 528 689 B1**
(45) Date of publication and mention of the grant of the patent: **15.04.2026**
(21) Application number: 23807511.3
(22) Date of filing: 10.05.2023
(51) Int. Cl.: G08G 1/09, G16Y 10/40, G16Y 40/30, G05D 1/224, G05D 1/227, G05D 1/698, G05D 105/22, G05D 107/13, G05D 109/10

(54) **INFORMATION PROCESSING METHOD, INFORMATION PROCESSING DEVICE, AND PROGRAM**
INFORMATIONSVERARBEITUNGSVERFAHREN, INFORMATIONSVERARBEITUNGSVORRICHTUNG UND PROGRAMM
PROCÉDÉ DE TRAITEMENT D'INFORMATIONS, DISPOSITIF DE TRAITEMENT D'INFORMATIONS, ET PROGRAMME

(30) Priority: 17.05.2022 JP 2022081106
(43) Date of publication of application: 26.03.2025
(73) Proprietor: Panasonic Intellectual Property Management Co., Ltd., Kadoma-shi, Osaka 571-0057 (JP)
(72) Inventor: TONOIKE, Takumi, Kadoma-shi, Osaka 571-0057 (JP); KUHARA, Shunsuke, Kadoma-shi, Osaka 571-0057 (JP); ARAI, Toshiya, Kadoma-shi, Osaka 571-0057 (JP); ANABUKI, Motoshi, Kadoma-shi, Osaka 571-0057 (JP); OYA, Akihisa, Kadoma-shi, Osaka 571-0057 (JP)
(74) Representative: Novagraaf International SA
(86) International application number: PCT/JP2023/017549
(87) International publication number: WO 2023/223907

(56) References cited:
- JP-A- 2019 021 200
- JP-A- 2020 154 631
- US-A1- 2016 280 134
- US-A1- 2022 081 010
- US-B2- 11 137 754

## Description

### [Technical Field]

The embodiments of the present invention relate to an information processing method, an information processing device, and a program for remotely monitoring a plurality of autonomous vehicles.

### [Background Art]

In recent years, conceptualization and practical use experiments have been conducted for remote control systems that remotely monitor autonomous vehicles and, when necessary, perform remote intervention, such as remote operation, on the autonomous vehicles.

For example, a remote control device (server) capable of remotely controlling an autonomously traveling vehicle disclosed in Patent Literature (PTL) 1 includes: a communication device capable of communicating with the vehicle; an input device operated by an operator to intervene in the control of the vehicle; a margin calculator that calculates an operator intervention margin indicating the possibility that the operator can intervene in the control of the vehicle; and an instruction component that transmits an instruction related to the control of the vehicle to the vehicle via the communication device. PTL 1 discloses that the instruction component transmits to the vehicle an instruction to change its vehicle travel plan when the operator intervention margin is less than or equal to a predetermined value.

### [Citation List]

### [Patent Literature]

[PTL 1] Japanese Unexamined Patent Application Publication No. 2020-154631
[PTL 2] United States Patent application No. US 11 137 754 B2
[PTL 3] United States Patent application No. US 2016/280134 A1
[PTL 4] United States Patent application No. US 2022/081010 A1

### [Summary of Invention]

### [Technical Problem]

In a system where an operator intervenes, a method for mitigating a burden on the operator needs further improvement.

An object of the present disclosure is to provide an information processing method and the like capable of mitigating a burden on an operator.

### [Solution to Problem]

An information processing method according to one aspect of the present disclosure is an information processing method performed in an information processing device, the information processing method including: obtaining, for each of two or more autonomous mobile bodies, first information related to the autonomous mobile body; estimating, based on the first information, second information indicating a total number of two or more target autonomous mobile bodies beginning to be operated or monitored by a remote operator during a predetermined period, the two or more target autonomous mobile bodies being among the two or more autonomous mobile bodies; determining whether the total number indicated by the second information is greater than or equal to a predetermined value; and outputting at least one of third information for controlling one or more target autonomous mobile bodies among the two or more target autonomous mobile bodies or fourth information for providing the remote operator with notification, when the total number indicated by the second information is determined to be greater than or equal to the predetermined value.

An information processing device according to an aspect of the present disclosure includes: an obtainer that obtains, for each of two or more autonomous mobile bodies, first information related to the autonomous mobile body; an estimator that estimates, based on the first information, second information indicating a total number of two or more target autonomous mobile bodies beginning to be operated or monitored by a remote operator during a predetermined period, the two or more target autonomous mobile bodies being among the two or more autonomous mobile bodies; a determiner that determines whether the total number indicated by the second information is greater than or equal to a predetermined value; and an outputter that outputs at least one of third information for controlling one or more target autonomous mobile bodies among the two or more target autonomous mobile bodies or fourth information for providing the remote operator with notification, when the total number indicated by the second information is determined to be greater than or equal to the predetermined value.

A program according to one aspect of the present disclosure is a program for causing a computer to execute an information processing method including: obtaining, for each of two or more autonomous mobile bodies, first information related to the autonomous mobile body; estimating, based on the first information, second information indicating a total number of two or more target autonomous mobile bodies beginning to be operated or monitored by a remote operator during a predetermined period, the two or more target autonomous mobile bodies being among the two or more autonomous mobile bodies; determining whether the total number indicated by the second information is greater than or equal to a predetermined value; and outputting at least one of third information for controlling one or more target autonomous mobile bodies among the two or more target autonomous mobile bodies or fourth information for providing the remote operator with notification, when the total number indicated by the second information is determined to be greater than or equal to the predetermined value.

### [Advantageous Effects of Invention]

According to the present disclosure, a burden on the operator can be mitigated.

### [Brief Description of Drawings]

[FIG. 1]

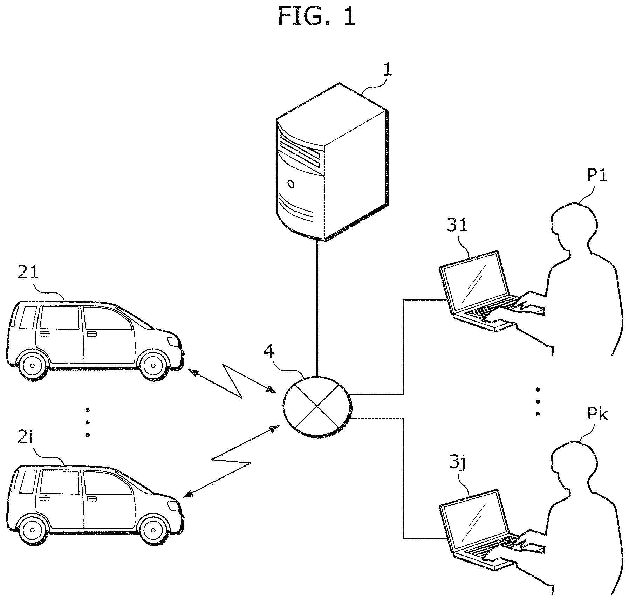

   FIG. 1 is a block diagram illustrating an example of a control system in an embodiment of the present disclosure.
[FIG. 2]

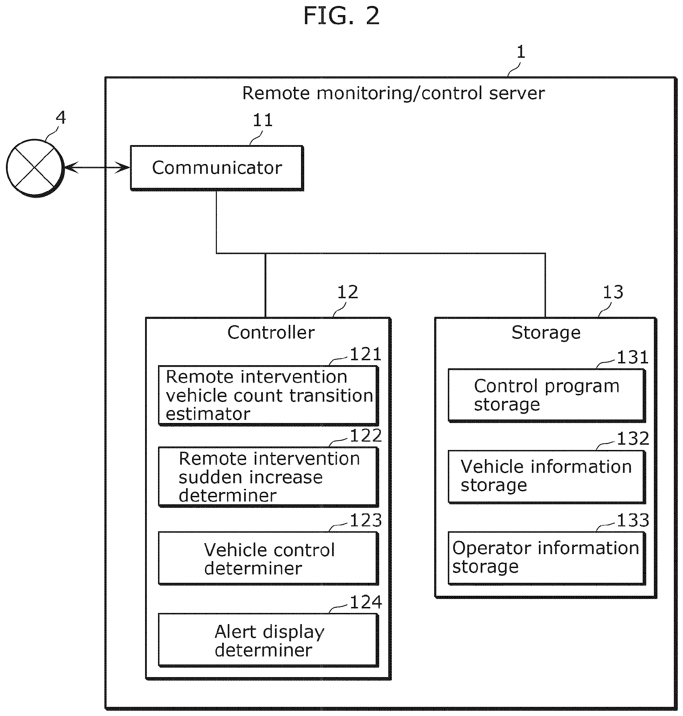

   FIG. 2 is a block diagram illustrating an example of a remote monitoring/control server illustrated in FIG. 1.
[FIG. 3]

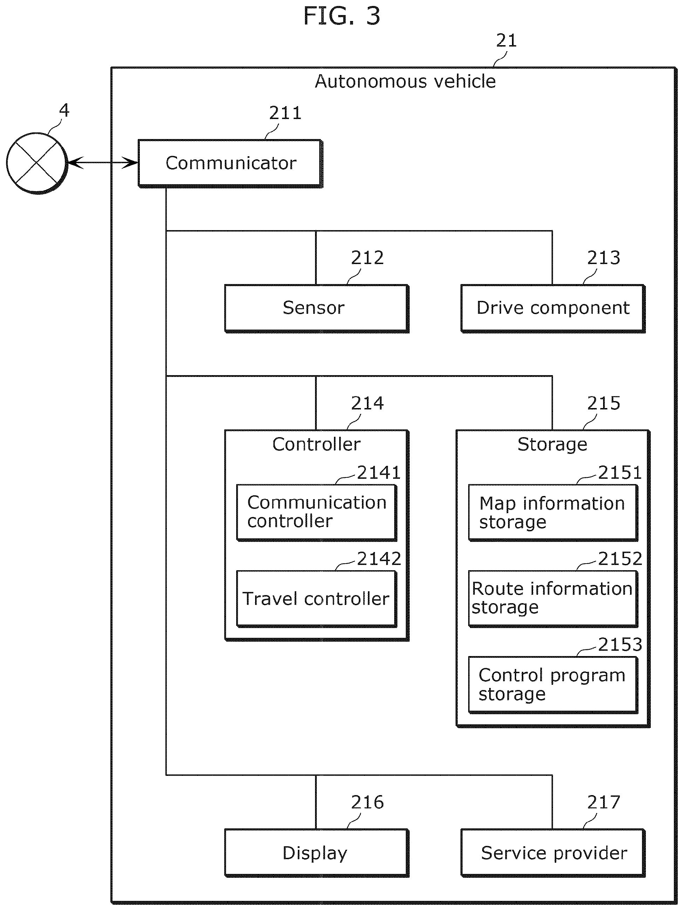

   FIG. 3 is a block diagram illustrating an example of an autonomous vehicle illustrated in FIG. 1.
[FIG. 4]

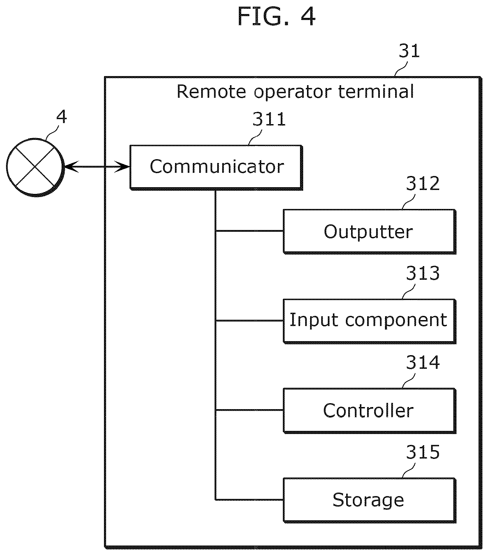

   FIG. 4 is a block diagram illustrating an example of a remote operator terminal illustrated in FIG. 1.
[FIG. 5]

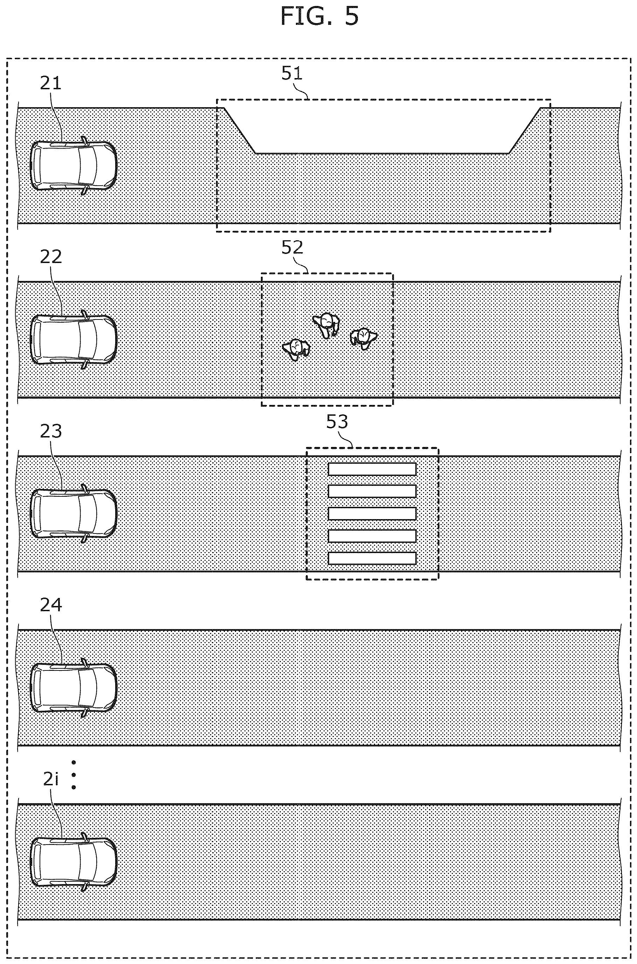

   FIG. 5 is an explanatory diagram illustrating an example of vehicle information obtained by the remote monitoring/control server illustrated in FIG. 1.
[FIG. 6]

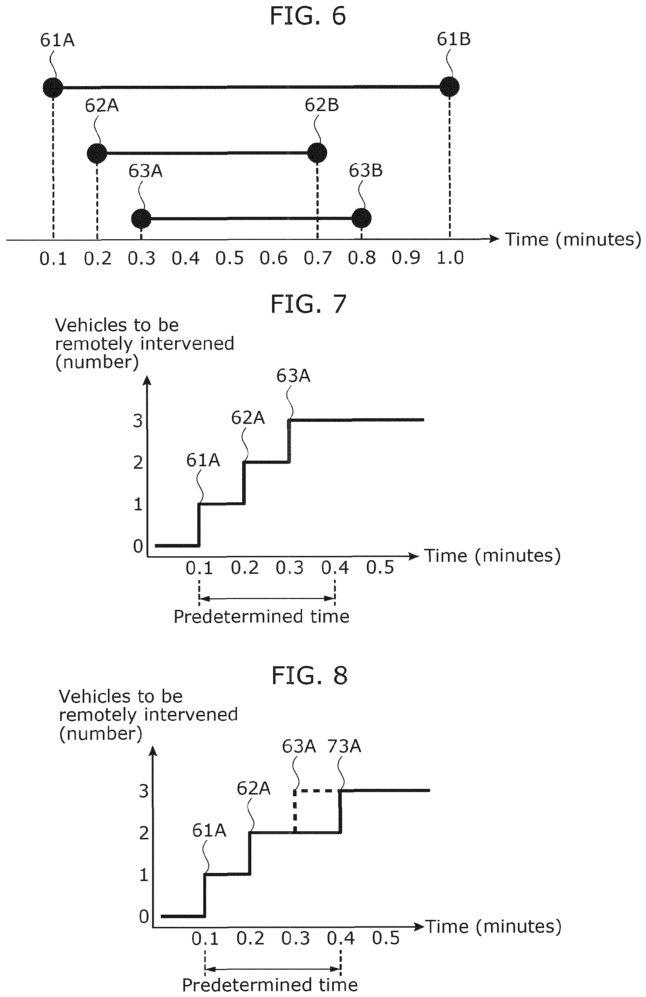

   FIG. 6 is an explanatory diagram illustrating an example of remote intervention information in the example illustrated in FIG. 5.
[FIG. 7]
   FIG. 7 is an explanatory diagram illustrating an example of determining whether there will be a sudden increase in remote interventions in the example illustrated in FIG. 5.
[FIG. 8]
   FIG. 8 is an explanatory diagram illustrating an example of determining vehicle control to avoid a sudden increase in remote interventions in the example illustrated in FIG. 5.
[FIG. 9]

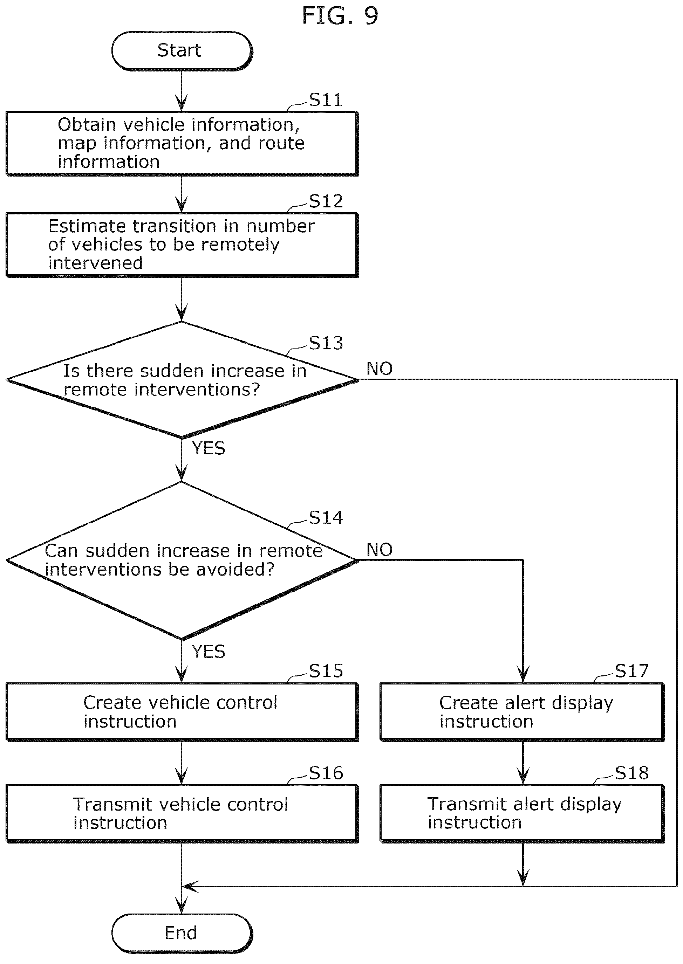

   FIG. 9 is a flowchart illustrating an example of a process to avoid a sudden increase in remote interventions by the remote monitoring/control server illustrated in FIG. 1.

### [Description of Embodiments]

### (Underlying Knowledge Forming Basis of the Present Disclosure)

As described above, when an operator is monitoring a plurality of autonomous vehicles, a remote intervention occurs as follows: the operator remotely operates the autonomous vehicles in a situation where continuing the autonomous control of the autonomous vehicles is difficult, or the operator issues a stop instruction to the autonomous vehicles to give way to a pedestrian or another vehicle. When a plurality of remote interventions as described above occur in a short period of time, it is necessary to perform a process of determining the response order and response content for remotely intervening in a plurality of autonomous vehicles that have requested remote intervention. In this case, a sudden increase in the amount of information for the operator to grasp places a heavy mental burden on the operator, and the time taken to determine the response hinders the operation of the autonomous vehicles due to a change in the situation during that time. The prior art discloses that vehicle control is performed to adjust the number of vehicles to be remotely intervened simultaneously by controlling the vehicles so that the operator can perform remote intervention with sufficient time. However, it has not been considered conventionally to perform vehicle control, taking into account a burden on the operator caused by a sudden increase in the number of vehicles that will require remote intervention in a short period of time. Thus, there is a burden on the operator caused by a sudden increase in the number of vehicles that will require remote intervention in a short period of time. Therefore, a method for mitigating the burden on the operator due to such a cause needs to be improved.

To solve the above problem, in the present disclosure, for example, in a situation where a sudden increase in remote interventions is predicted, a vehicle control instruction is transmitted to the autonomous vehicle to shift the time when the remote intervention for the autonomous vehicle occurs. This can result in reducing the frequency of situations where a plurality of remote intervention request alerts are generated, or where it is necessary to determine the response to a plurality of autonomous vehicles in a short period of time, thus mitigating the burden on the operator.

That is, an information processing method according to one aspect of the present disclosure is an information processing method performed in an information processing device, the information processing method including: obtaining, for each of two or more autonomous mobile bodies, first information related to the autonomous mobile body; estimating, based on the first information, second information indicating a total number of two or more target autonomous mobile bodies beginning to be operated or monitored by a remote operator during a predetermined period, the two or more target autonomous mobile bodies being among the two or more autonomous mobile bodies; determining whether the total number indicated by the second information is greater than or equal to a predetermined value; and outputting at least one of third information for controlling one or more target autonomous mobile bodies among the two or more target autonomous mobile bodies or fourth information for providing the remote operator with notification, when the total number indicated by the second information is determined to be greater than or equal to the predetermined value.

According to this arrangement, for example, when a sudden increase in remote interventions is predicted, a travel plan instruction for avoiding the sudden increase is created as the third information, and the created instruction is transmitted to the autonomous mobile body (for example, autonomous vehicle). Thus, the sudden increase in the number of remote interventions (operations or monitoring) is avoided, enabling a reduction in the frequency of situations where a plurality of remote intervention request alerts are generated, or where it is necessary to determine the response to a plurality of autonomous mobile bodies in a short period of time. This can mitigate the burden on the remote operator caused by the sudden increase in remote interventions. As a result, when the remote operator performs remote monitoring for a long period of time or remote monitoring on a plurality of autonomous mobile bodies, it is possible to mitigate a decrease in the remote operator's concentration due to fatigue, achieving a situation where safe remote monitoring is easily performed. For example, fourth information for alerting the remote operator is output to a terminal operated by the remote operator, and the remote operator is notified in advance of the timing of the sudden increase in the number of autonomous mobile bodies requiring remote intervention. Thereby, the remote operator can prepare in advance to respond to the sudden increase in remote interventions. Thus, the information processing method according to one aspect of the present disclosure can mitigate the burden on the remote operator caused by the sudden increase in remote interventions.

For example, the first information obtained for each of two or more autonomous mobile bodies includes at least one of: (1) fifth information related to a state and a surrounding environment of the autonomous mobile body; (2) sixth information related to an area in which the autonomous mobile body moves; or (3) seventh information related to a route along which the autonomous mobile body moves.

This enables accurate estimation of the fourth information.

For example, the information processing method further includes: determining, based on the first information, whether a predetermined control is executable on the one or more target autonomous mobile bodies when the total number indicated by the second information is determined to be greater than or equal to a predetermined value. In the outputting of the at least one of the third information or the fourth information, the third information is output to the one or more target autonomous mobile bodies when the predetermined control is determined to be executable on the one or more target autonomous mobile bodies, and the fourth information is output to a terminal for providing the remote operator with notification when the predetermined control is determined not to be executable on the one or more target autonomous mobile bodies.

According to this arrangement, when the autonomous mobile body can execute a predetermined control such as a temporary stop, the autonomous mobile body is caused to execute the predetermined control, so that the sudden increase in the number of autonomous mobile bodies requiring remote intervention can be prevented. The autonomous mobile body may not be able to perform a predetermined control such as a temporary stop, depending on its traveling location. In such a case, fourth information for alerting the remote operator is output to the terminal operated by the remote operator, and the remote operator is notified in advance of the timing of the sudden increase in the number of autonomous mobile bodies requiring remote intervention. Thereby, the remote operator can prepare in advance to respond to the sudden increase in remote interventions. Thus, the burden on the remote operator caused by the sudden increase in remote interventions can be mitigated.

For example, the predetermined value is at least 2, and the information processing method further includes: obtaining eighth information related to two or more remote operators including the remote operator; generating, based on the second information, ninth information indicating a result of determining which of the two or more remote operators is to operate or monitor the two or more target autonomous mobile bodies; and outputting the ninth information to a terminal for providing the two or more remote operators with notification.

This eliminates the need for the remote operators to determine among themselves, for example, which remote operator is assigned to respond to the autonomous mobile bodies requiring remote intervention. Thus, the burden on the remote operator can be further mitigated.

For example, the third information includes at least one of: information for causing the one or more target autonomous mobile bodies to temporarily stop; information for causing the one or more target autonomous mobile bodies to change speeds; or information for causing the one or more target autonomous mobile bodies to change routes for travel.

Thereby, the sudden increase in the number of autonomous mobile bodies requiring remote intervention can be prevented suitably.

For example, the information processing method further includes: generating, based on the first information, tenth information indicating, for each of the two or more target autonomous mobile bodies, a result of calculating at least one of (i) a degree of safety when the target autonomous mobile body executes a predetermined control, or (ii) a degree of influence on the two or more autonomous mobile bodies when the target autonomous mobile body executes the predetermined control; and determining the one or more target autonomous mobile bodies based on the tenth information.

This enables the autonomous mobile bodies to safely perform the predetermined control. Alternatively, it is possible to reduce the temporary stop time and the like caused by the sudden increase in remote interventions when the two or more autonomous mobile bodies are considered as a whole.

For example, in the determining of the one or more target autonomous mobile bodies, a target autonomous mobile body having a high calculated degree of safety among the two or more target autonomous mobile bodies is determined as the one or more target autonomous mobile bodies.

This can prevent a decrease in the safety of travel of the autonomous mobile bodies.

For example, in the determining of the one or more target autonomous mobile bodies, a target autonomous mobile body having a low calculated degree of influence among the two or more target autonomous mobile bodies is determined as the one or more target autonomous mobile bodies.

This can lead to a reduction in the impact of the predetermined control, such as a travel delay, when the two or more autonomous mobile bodies are considered as a whole.

For example, the fourth information includes at least one of information indicating the predetermined period or information related to the third information.

This enables the remote operator to grasp the timing of the sudden increase in remote interventions or the type of travel being performed by the autonomous mobile body.

An information processing device according to an aspect of the present disclosure includes: an obtainer that obtains, for each of two or more autonomous mobile bodies, first information related to the autonomous mobile body; an estimator that estimates, based on the first information, second information indicating a total number of two or more target autonomous mobile bodies beginning to be operated or monitored by a remote operator during a predetermined period, the two or more target autonomous mobile bodies being among the two or more autonomous mobile bodies; a determiner that determines whether the total number indicated by the second information is greater than or equal to a predetermined value; and an outputter that outputs at least one of third information for controlling one or more target autonomous mobile bodies among the two or more target autonomous mobile bodies or fourth information for providing the remote operator with notification, when the total number indicated by the second information is determined to be greater than or equal to the predetermined value.

A program according to one aspect of the present disclosure is a program for causing a computer to execute an information processing method including: obtaining, for each of two or more autonomous mobile bodies, first information related to the autonomous mobile body; estimating, based on the first information, second information indicating a total number of two or more target autonomous mobile bodies beginning to be operated or monitored by a remote operator during a predetermined period, the two or more target autonomous mobile bodies being among the two or more autonomous mobile bodies; determining whether the total number indicated by the second information is greater than or equal to a predetermined value; and outputting at least one of third information for controlling one or more target autonomous mobile bodies among the two or more target autonomous mobile bodies or fourth information for providing the remote operator with notification, when the total number indicated by the second information is determined to be greater than or equal to the predetermined value.

According to these arrangements, a similar effect to that of the information processing method according to one aspect of the present disclosure is achieved.

Note that all the embodiments described below are intended to show specific examples of the present disclosure. The numerical values, shapes, components, steps, and the order of steps shown in the following embodiments are mere examples, and are not intended to limit the present disclosure. Among the components in the following embodiments, components not recited in the independent claims are described as optional components. In all the embodiments, the content of each may be combined. Moreover, unless departing from the spirit of the present disclosure, various variations of the embodiments of the present disclosure are included in the present disclosure.

Embodiments of the present disclosure will be described below with reference to the drawings.

### (Embodiment)

### [Configuration]

### <Overall Summary>

FIG. 1 is a block diagram illustrating an example of a configuration of a control system in an embodiment of the present disclosure.

The control system in the embodiment is a remote control system that performs remote intervention, such as monitoring or operation, on autonomous mobile bodies, such as autonomous vehicles, from remote locations when necessary.

The control system in the embodiment includes remote monitoring/control server 1, a plurality of autonomous vehicles 21 to 2i, and a plurality of remote operator terminals 31 to 3j. Here, i is, for example, any integer greater than or equal to 2. j is, for example, any positive integer.

In the present embodiment, a case where the control system includes the plurality of autonomous vehicles 21 to 2i and the plurality of remote operator terminals 31 to 3j will be described as an example, but the present embodiment is not particularly limited to this example. The control system may use, for example, one remote operator terminal.

In the present embodiment, autonomous vehicles will be described as an example of the autonomous mobile bodies but the present embodiment is not particularly limited to this example. The autonomous mobile bodies may be various types of autonomously moving mobile bodies such as construction machinery, ships, or drones.

Remote monitoring/control server 1, the plurality of autonomous vehicles 21 to 2i, and the plurality of remote operator terminals 31 to 3j are communicatively connected to each other via network 4, such as the Internet, a predetermined wired network like a dedicated line, or a predetermined wireless network.

Remote monitoring/control server 1 is, for example, a computer formed of a cloud server including a processor, a memory, an external storage device, a communication device, and the like. Remote monitoring/control server 1 receives and records vehicle information (more specifically, vehicle state information and surrounding environment information) from each of the plurality of autonomous vehicles 21 to 2i.

Each of the plurality of autonomous vehicles 21 to 2i is, for example, a mobile body (in the present embodiment, a vehicle) that drives autonomously at level 4 (high driving automation) or level 5 (full driving automation) as defined in J3016 by SAE International in the United States and travels in an unattended state.

Note that each of the plurality of autonomous vehicles 21 to 2i is not particularly limited to the above example and may be, for example, an autonomous vehicle that drives autonomously at level 1 to 3 or a normal vehicle that is driven at level 0 (a manually driven vehicle that is manually driven by a driver).

Each of the plurality of autonomous vehicles 21 to 2i is not limited to a vehicle, and may be a mobile body that moves autonomously, such as a robot or a drone.

The plurality of autonomous vehicles 21 to 2i are configured to be switchable between an autonomous travel mode, in which the vehicles travel autonomously, and a remote operation mode, in which the vehicles are remotely operated by the plurality of remote operator terminals 31 to 3j, respectively. Each of the plurality of autonomous vehicles 21 to 2i is an autonomous vehicle that executes a predetermined task in the autonomous travel mode. Here, the predetermined task includes, for example, a task in a goods delivery service, such as home delivery, and a task in a human delivery service, such as a taxi service.

In a normal task execution state, each of the plurality of autonomous vehicles 21 to 2i is set to the autonomous travel mode and is traveling autonomously.

Each of the plurality of autonomous vehicles 21 to 2i obtains information related to its surrounding environment using a sensor, and transmits surrounding environment information indicating the obtained result to remote monitoring/control server 1. The plurality of remote operator terminals 31 to 3j receive and display the surrounding environment information respectively obtained by the plurality of autonomous vehicles 21 to 2i from remote monitoring/control server 1. The plurality of operators P1 to Pk (where k is any positive integer) remotely monitor the travel states of the plurality of autonomous vehicles 21 to 2i located at remote locations, while viewing the pieces of surrounding environment information for autonomous vehicles 21 to 2i displayed on the plurality of remote operator terminals 31 to 3j, respectively.

Note that the number of operators P1 to Pk may be two or more or may be one.

Operators P1 to Pk do not necessarily need to perform remote monitoring while viewing the pieces of surrounding environment information for the plurality of autonomous vehicles 21 to 2i, respectively. For example, remote operator terminals 31 to 3j may respectively display pieces of information that plot the locations of autonomous vehicles 21 to 2i on maps. Operators P1 to Pk may perform remote monitoring while viewing such pieces of information displayed. As described above, remote operator terminals 31 to 3j may display any of the plurality of autonomous vehicles 21 to 2i, as long as the displays are intended for operators P1 to Pk to remotely monitor the respective vehicles.

The plurality of autonomous vehicles 21 to 2i are configured to be subjected to remote intervention, such as remote operation and/or voice communication, from the plurality of remote operator terminals 31 to 3j, respectively.

When a predetermined event occurs, each of the plurality of autonomous vehicles 21 to 2i transmits a remote intervention request (request information) that requests remote intervention to remote monitoring/control server 1. Remote monitoring/control server 1 notifies at least one of remote operator terminals 31 to 3j that a remote intervention request has occurred (in other words, been received). Upon receiving the notification, at least one of the remote operator terminals displays a remote intervention request alert. When operators P1 to Pk can perform remote intervention using remote operator terminals 31 to 3j, the remote intervention request is accepted, and among the plurality of autonomous vehicles 21 to 2i, the autonomous vehicle that has transmitted the remote intervention request is remotely intervened.

Here, the time when the predetermined event occurs refers to when a situation arises requiring at least one of the plurality of autonomous vehicles 21 to 2i to be remotely intervened. Specifically, the time when the predetermined event occurs includes: (i) when a situation arises that makes it difficult for the autonomous vehicle to continue autonomous travel; (ii) when a situation arises that requires an instruction to start or end autonomous control or a vehicle operation instruction, such as door opening or closing, associated with the above predetermined task; and (iii) when a situation arises that necessitates a temporary stop to check the safety of the surroundings and the resumption of autonomous travel at a location requiring particular caution during autonomous travel, such as a pedestrian crossing.

The situation that makes it difficult for the autonomous vehicle to continue autonomous travel includes, for example: (iv) a situation where environmental conditions are deteriorating due to bad weather; (v) a situation where roads are congestion with many people or other vehicles; and (vi) a situation where sensor 212 (see FIG. 3), which will be described later, is out of order.

Note that the method of performing the remote intervention is not particularly limited to the above example. For example, when the plurality of operators P1 to Pk determine through remote monitoring that remote intervention is necessary, the plurality of autonomous vehicles 21 to 2i are remotely intervened, respectively. For example, a remote intervention, such as a voice communication instruction for the purpose of alerting a person or another vehicle approaching or a temporary stop instruction for the purpose of giving way to a person or another vehicle, may be performed.

The plurality of remote operator terminals 31 to 3j receive and display pieces of vehicle information from the plurality of autonomous vehicles 21 to 2i, respectively. Operators P1 to Pk perform remote intervention on plurality of autonomous vehicles 21 to 2i using plurality of remote operator terminals 31 to 3j, respectively. The plurality of remote operator terminals 31 to 3j transmit the remote intervention instructions input by operators P1 to Pk to the plurality of autonomous vehicles 21 to 2i, respectively. Upon receiving the remote intervention instructions from the plurality of remote operator terminals 31 to 3j, the plurality of autonomous vehicles 21 to 2i each perform a predetermined vehicle control (hereinafter also referred to simply as a vehicle control) in accordance with the remote intervention instruction.

In the case of a sudden increase in remote interventions, there will be a sudden increase in the number of remote intervention request alerts displayed on plurality of remote operator terminals 31 to 3j. In such a case, the amount of information for operators P1 to Pk to determine the response increases, thereby increasing burdens on operators P1 to Pk.

Therefore, when a sudden increase in remote interventions is predicted, remote monitoring/control server 1 determines whether the sudden increase in remote interventions can be avoided through the vehicle control for at least some of autonomous vehicles 21 to 2i. When the sudden increase in remote interventions is determined to be avoidable, remote monitoring/control server 1 creates a vehicle control instruction and transmits the created vehicle control instruction to the autonomous vehicles to be controlled among autonomous vehicles 21 to 2i.

Note that the timing for predicting a sudden increase in remote interventions may follow a constant cycle. In this case, it is possible to perform the vehicle control while responding to changing situations during the travel of autonomous vehicles 21 to 2i.

The timing for predicting a sudden increase in remote interventions may also be when a route is planned for autonomous vehicles 21 to 2i to travel (move). In this case, it is possible to generate a plan for a route that is less likely to cause a sudden increase in remote interventions for autonomous vehicles 21 to 2i.

Subsequently, the configurations of remote monitoring/control server 1, autonomous vehicles 21 to 2i, and remote operator terminals 31 to 3j will be described.

### <Remote Monitoring/Control Server>

FIG. 2 is a block diagram illustrating an example of the configuration of remote monitoring/control server 1 illustrated in FIG. 1.

Remote monitoring/control server 1 includes communicator 11, controller 12, and storage 13.

Controller 12 includes remote intervention vehicle count transition estimator 121, remote intervention sudden increase determiner 122, vehicle control determiner 123, and alert display determiner 124.

Storage 13 includes control program storage 131, vehicle information storage 132, and operator information storage 133.

Communicator 11 is a communication device that receives, from each of the plurality of autonomous vehicles 21 to 2i, the vehicle information, map information, and route information for each of autonomous vehicles 21 to 2i and stores these pieces of information in vehicle information storage 132. The communication device is implemented by, for example, a communication interface, a processor, and a memory that stores a control program and the like to be executed by the processor. The communication interface is implemented by, for example, a connector to which a communication line is connected when wired communication is performed. The communication interface is implemented by, for example, an antenna and a wireless communication circuit when wireless communication is performed. Communicator 11 transmits the vehicle control instruction created by vehicle control determiner 123 to each of the plurality of autonomous vehicles 21 to 2i.

The vehicle information includes the size of each of autonomous vehicles 21 to 2i, the travel state such as the location and speed of each of autonomous vehicles 21 to 2i, and information related to the surrounding environment of each of autonomous vehicles 21 to 2i. For example, communicator 11 receives, as the vehicle information from autonomous vehicle 21, the size of autonomous vehicle 21, the location, travel speed, steering angle, and the like (also referred to as vehicle state information) of autonomous vehicle 21, and information detected by sensor 212 of autonomous vehicle 21 (also referred to as surrounding environment information).

The map information is information related to a location where each of autonomous vehicles 21 to 2i travels. For example, communicator 11 receives, as the map information from autonomous vehicle 21, information about a map that includes a location where autonomous vehicle 21 travels (for example, information indicating road widths and the presence or absence of traffic lights).

The route information is information related to a travel route along which each of autonomous vehicles 21 to 2i travels. For example, communicator 11 receives, as the route information from autonomous vehicle 21, information indicating a route along which autonomous vehicle 21 travels.

Note that the map information and the route information may be stored in remote monitoring/control server 1.

Communicator 11 receives remote intervention information from each of the plurality of remote operator terminals 31 to 3j and stores the information in operator information storage 133.

The remote intervention information is information indicating how the operator remotely intervened in each of autonomous vehicles 21 to 2i. For example, the remote intervention information includes the details of the driving performed by the operator for each of autonomous vehicles 21 to 2i, the instruction content, such as slow driving, given to each of autonomous vehicles 21 to 2i, and/or information indicating that monitoring is taking place (for example, information indicating that particular attention is being paid to the autonomous vehicle to be monitored among the plurality of autonomous vehicles 21 to 2i by displaying only the information about that autonomous vehicle on the remote operator terminal).

Communicator 11 transmits an alert display instruction created by alert display determiner 124 to each of the plurality of remote operator terminals 31 to 3j.

Controller 12 is formed of a processor such as a central processing unit (CPU), and executes a predetermined control program stored in control program storage 131 to function as remote intervention vehicle count transition estimator 121, remote intervention sudden increase determiner 122, vehicle control determiner 123, and alert display determiner 124.

Remote intervention vehicle count transition estimator 121 refers to vehicle information storage 132 to obtain the vehicle information, map information, and route information for each of autonomous vehicles 21 to 2i, and estimates the transition in the number of autonomous vehicles 21 to 2i that will require remote intervention at a future time (also referred to as the number of vehicles to be remotely intervened) as the transition in the number of autonomous vehicles 21 to 2i in which remote interventions will occur. Specifically, remote intervention vehicle count transition estimator 121 estimates the future start time and end time of the remote intervention performed at a future time for each of the autonomous vehicles of the plurality of autonomous vehicles 21 to 2i from the vehicle information, map information, and route information for each of plurality of autonomous vehicles 21 to 2i, and calculates the number of vehicles to be remotely intervened at the future time as the number of autonomous vehicles 21 to 2i in which remote interventions will occur.

Note that a specific example in which remote intervention vehicle count transition estimator 121 obtains the vehicle information, map information, and route information for each of autonomous vehicles 21 to 2i and estimates the transition in the number of autonomous vehicles 21 to 2i to be remotely intervened simultaneously at a future time will be described later.

Remote monitoring/control server 1 may obtain information used for estimating the future start time and end time of the remote intervention performed at a future time for each of the plurality of autonomous vehicles 21 to 2i from an external device such as an infrastructure.

In the method of estimating the future start time and end time of the remote intervention performed at a future time for each of the plurality of autonomous vehicles 21 to 2i, for example, when a pedestrian is detected in the vehicle information for each of autonomous vehicles 21 to 2i, the start time and end time of the passing of each of autonomous vehicles 21 to 2i and the pedestrian may be calculated from the relative speed of each of autonomous vehicles 21 to 2i and the pedestrian, and the start time and end time of the passing of each of autonomous vehicles 21 to 2i and the pedestrian may be set as the start time and end time of the remote intervention at the future time for each of the plurality of autonomous vehicles 21 to 2i.

Remote intervention vehicle count transition estimator 121 outputs the estimated number of vehicles to be remotely intervened at the future time and the estimated start time and end time of the remote intervention at the future time for each of the plurality of autonomous vehicles 21 to 2i to remote intervention sudden increase determiner 122.

In the method of estimating the future start time and end time of the remote intervention performed at a future time for each of the plurality of autonomous vehicles 21 to 2i, the start time and end time of each of autonomous vehicles 21 to 2i crossing the pedestrian crossing may be used as the estimated times. For example, the start time and end time of autonomous vehicle 21 crossing the pedestrian crossing can be calculated from the vehicle speed received from autonomous vehicle 21 and the location of the pedestrian crossing included in the map information stored in map information storage 2151.

In the method of estimating the future start time and end time of the remote intervention performed at a future time for each of the plurality of autonomous vehicles 21 to 2i, the travel start time and travel end time of each of autonomous vehicles 21 to 2i on a narrow road, such as a road with a width twice or less the width of the vehicle, may be used as the estimated times. The road width information may be stored in map information storage 2151 in advance or may be calculated using information obtained by sensor 212 while autonomous vehicle 21 is traveling.

In the method of estimating the future start time and end time of the remote intervention performed at a future time for each of the plurality of autonomous vehicles 21 to 2i, the estimation may be performed by integrating the vehicle information, map information, and route information for each of autonomous vehicles 21 to 2i. For example, by associating a function or table (also referred to as probability information) stored in control program storage 131 in advance with the vehicle information, map information, and route information, the probability of remote intervention occurring based on each piece of information may be estimated. Then, the start time and end time for the total probability of remote intervention occurring being greater than or equal to a predetermined value, for example, 50%, may be estimated.

The probability of remote intervention occurring is a numerical value indicating the likelihood that the operator will need to perform remote intervention. For example, the probability of remote intervention occurring is high at points where driving is difficult, such as points with a narrow road width, or where there is a high risk of danger, such as points with many pedestrians. On the other hand, the probability of remote intervention occurring is low at points where driving is easy, such as points with a broad road width, or where there is a low risk of danger, such as points without pedestrians.

For example, remote intervention vehicle count transition estimator 121 calculates the probability of remote intervention occurring from the number of pedestrians, road width, and the like in the travel route of each of autonomous vehicles 21 to 2i, based on the vehicle information, map information, and probability information (for example, information indicating the probability of remote intervention occurring relative to the road width, the probability of remote intervention occurring relative to the number of pedestrians, and the like). Remote intervention vehicle count transition estimator 121 determines, for example, whether the calculated probability of remote intervention occurring exceeds a predetermined threshold, and determines the need for the operator to perform remote intervention when determining that the calculated probability of remote intervention occurring exceeds the threshold. Remote intervention vehicle count transition estimator 121 calculates, for example, the probability of remote intervention occurring at each point on the travel routes of autonomous vehicles 21 to 2i, and calculates when the calculated probability of remote intervention occurring exceeds the threshold based on the location and speed (for example, the average speed in a travel plan) of each of autonomous vehicles 21 to 2i indicated by the vehicle information. Thus, remote intervention vehicle count transition estimator 121 estimates (calculates) when and how many autonomous vehicles 21 to 2i will require remote intervention, that is, the transition in the number of vehicles to be remotely intervened.

Using the above function or table, for example, with respect to pedestrian approach information included in the vehicle information, remote intervention vehicle count transition estimator 121 calculates the probability of remote intervention occurring from 10 to 12 seconds later, when two pedestrians, located 10 meters away from autonomous vehicle 21 and approaching autonomous vehicle 21 at a relative speed of 1.0 m/s, as 50%. Using the above function or table to calculate, for example, with respect to road width information included in the map information, remote intervention vehicle count transition estimator 121 calculates the probability of remote intervention occurring from 10 to 20 seconds later, when autonomous vehicle 21 is traveling at a speed of 1.0 m/s and the road width from 10 to 20 m from autonomous vehicle 21 is twice or less the vehicle width, as 30%. The threshold is set to, for example, a 40% probability of remote intervention occurring. When the calculated probability of remote intervention occurring is 50%, remote intervention vehicle count transition estimator 121 determines that the operator needs to perform remote intervention. On the other hand, for example, when the calculated probability of remote intervention occurring is 30%, remote intervention vehicle count transition estimator 121 determines that the operator does not need to perform remote intervention.

Remote intervention sudden increase determiner 122 estimates whether there will be a sudden increase in remote interventions at a future time from the transition in the number of vehicles to be remotely intervened, estimated by remote intervention vehicle count transition estimator 12No. Specifically, the estimation of whether there will be a sudden increase in remote interventions at a future time is based on whether the increase in the number of vehicles to be remotely intervened is a predetermined first threshold, for example, three vehicles or more, within a predetermined time (also referred to as a predetermined period), for example, within 0.3 minutes, from the start time of the remote intervention for each of the plurality of autonomous vehicles 21 to 2i. The predetermined period may be arbitrarily determined in advance, and is not particularly limited. The predetermined period may be less than 0.3 minutes or may be 0.3 minutes or more.

Note that a specific example in which remote intervention sudden increase determiner 122 estimates whether there will be a sudden increase in remote interventions will be described later.

When it is estimated that there will be a sudden increase in remote interventions, remote intervention sudden increase determiner 122 outputs the vehicle information, as well as information indicating the presence or absence, the timing, and other details of the vehicle intervention for each of the plurality of autonomous vehicles 21 to 2i, to vehicle control determiner 123.

As the predetermined time, a time estimated to be required for the operator to respond to the remote intervention may be used. As the time estimated to be required for the operator to relieve a burden caused by a sudden increase in remote interventions, for example, the following recorded time may be used: the time required in a similar past situation to determine the response order and response content for a plurality of autonomous vehicles that required remote intervention (also referred to as remote intervention requesting vehicles) by operators P1 to Pk.

The predetermined time and the predetermined first threshold may be changed depending on the operator's skill level or the operator's fatigue level. For example, the burden caused by a sudden increase in remote interventions is large when the operator's skill level is low or the operator's fatigue level is high. Thus, the predetermined time may be shortened or the predetermined first threshold may be decreased so that a sudden increase in remote interventions can be more easily determined. The operator's skill level may be defined, for example, by the operator's accumulated remote monitoring time to date, and may be stored in operator information storage 133 The operator's fatigue level may be defined, for example, by the duration of continuous remote monitoring, and may be stored in operator information storage 133.

The predetermined time and the predetermined first threshold may be changed depending on the time of day or weather conditions. For example, at night or in bad weather, it becomes difficult to check the situation for determining the response order and response content for a plurality of remote intervention requesting vehicles, thus increasing the burden caused by a sudden increase in remote interventions. Therefore, in such a case, the predetermined time may be shortened or the predetermined first threshold may be decreased so that a sudden increase in remote interventions can be more easily determined.

The predetermined first threshold may be changed according to the number of vehicles to be remotely intervened at the immediately preceding time. For example, when the priority of the remote intervention is higher for the remote intervention requesting vehicle than for the autonomous vehicle being remotely intervened (also referred to as the vehicle under remote intervention), the remote intervention for the vehicle under remote intervention can be temporarily stopped under the operator's determination, enabling the remote intervention requesting vehicle to be remotely intervened. In such a case, each time a remote intervention request is generated, that is, each time request information for making a remote intervention request is received from the remote intervention requesting vehicle, for example, the operator needs to check the respective situations of the vehicle under remote intervention and the remote intervention requesting vehicle and determine the response order and response content Therefore, in such a case, the greater the number of vehicles to be remotely intervened, the more difficult it is for the operator to check the situation, and the greater the burden on the operator caused by a sudden increase in remote interventions. In this case, the predetermined first threshold is set to be small, for example, two vehicles, because the burden on the operator caused by a sudden increase in remote interventions is greater when the number of vehicles to be remotely intervened increases from 3 to 6 than when the number of vehicles to be remotely intervened increases from 0 to 3. As described above, for example, remote intervention sudden increase determiner 122 can appropriately change the determination condition (in the present embodiment, the first threshold) for whether there will be a sudden increase in remote interventions according to the situation, thereby mitigating the burden on the operator caused by a sudden increase in remote interventions.

Note that remote intervention sudden increase determiner 122 may change (determine) the predetermined first threshold based on the service quality of the service provided by the autonomous vehicles. For example, remote intervention sudden increase determiner 122 may adjust to decrease the first threshold so that a sudden increase can be more easily determined when service quality does not deteriorate, assuming that the predetermined vehicle control is performed to avoid a sudden increase in remote interventions (for example, when there is no delay in the delivery completion time in the case of a product delivery service). For example, in the product delivery service, in a state where all vehicles have completed their commodity deliveries and are returning to the hangar, remote intervention sudden increase determiner 122 decreases the predetermined first threshold because the service quality does not deteriorate when the predetermined vehicle control is performed to avoid a sudden increase in remote interventions.

This can mitigate the burden on the operator while maintaining the service quality.

Vehicle control determiner 123 causes the plurality of autonomous vehicles 21 to 2i to execute the predetermined vehicle control based on the determination result of remote intervention sudden increase determiner 122. Specifically, vehicle control determiner 123 selects the minimum number of autonomous vehicles at least necessary to avoid a sudden increase in remote interventions, based on information received from remote intervention sudden increase determiner 122, such as the remote intervention information, vehicle information, map information, and route information for each of the plurality of autonomous vehicles 21 to 2i. For example, vehicle control determiner 123 makes this selection from among the plurality of plurality of autonomous vehicles 21 to 2i requiring remote intervention in order of the late start time of the remote intervention, and determines whether a sudden increase can be avoided through the vehicle control and whether the predetermined vehicle control is possible for the selected autonomous vehicle. The predetermined vehicle control is, for example, a vehicle control that performs a temporary stop for the shortest temporary stop time necessary to avoid a sudden increase in remote interventions. For example, assuming that autonomous vehicle 21 has performed the predetermined vehicle control, when it is determined that the sudden increase in remote interventions at the future time described above will not occur and when it is further determined that autonomous vehicle 21 can be safely stopped temporarily, the predetermined vehicle control is determined to be executable. As described above, an autonomous vehicle capable of safely performing the predetermined vehicle control (in other words, an autonomous vehicle with a high degree of safety) may be selected as the autonomous vehicle that performs the predetermined vehicle control.

For example, the minimum number of vehicles necessary to avoid the sudden increase in remote interventions can be calculated from the predetermined first threshold and the increased number of vehicles to be remotely intervened at the estimated time of the sudden increase in remote interventions.

For example, the shortest temporary stop time necessary to avoid the sudden increase in remote interventions can be calculated from the time necessary to cause the remote intervention to occur at a time after the lapse of the predetermined time from the remote intervention start time of the first remotely intervened autonomous vehicle.

Note that a specific example of vehicle control determiner 123 determining a predetermined vehicle control for avoiding the sudden increase in remote interventions will be described later.

When the sudden increase is determined to be avoidable through the predetermined vehicle control, vehicle control determiner 123 creates an instruction to execute the predetermined vehicle control (also referred to as a predetermined vehicle control instruction). Using communicator 11, vehicle control determiner 123 transmits the predetermined vehicle control instruction to the autonomous vehicle, among autonomous vehicles 21 to 2i, that will be caused to execute the predetermined vehicle control.

Note that vehicle control determiner 123 may transmit an alert to the operator via communicator 11 to determine the content of the predetermined vehicle control instruction, or may notify the operator of the content of the vehicle control instruction.

Vehicle control determiner 123 may also determine the content of the vehicle control and the vehicle on which the vehicle control is to be performed to minimize the deterioration in service quality.

This can mitigate the burden on the operator while maintaining the service quality.

When, after the transmission of the vehicle control instruction to autonomous vehicle 21, the sudden increase in remote interventions is avoided due to a change in the situation of autonomous vehicle 21 before or during the vehicle control, vehicle control determiner 123 may transmit, for example, an instruction to cancel the vehicle control instruction to autonomous vehicle 21 via communicator 11.

On the other hand, when the sudden increase is determined not to be avoidable through the predetermined vehicle control, vehicle control determiner 123 outputs to alert display determiner 124 the estimated time of the sudden increase in remote interventions, the presence or absence of remote intervention for the autonomous vehicle at a time before or after the estimated time of the sudden increase in remote interventions, and the vehicle information.

Alert display determiner 124 creates a predetermined alert display instruction based on the estimated time of the sudden increase in remote interventions, the presence or absence of remote intervention for the autonomous vehicle at the time before or after the estimated time of the sudden increase in remote interventions, and the vehicle information. Alert display determiner 124 transmits the alert display instruction to each of remote operator terminals 31 to 3j using communicator 11.

The predetermined alert display instruction is, for example, an instruction to display to all the operators the estimated time of the sudden increase in remote interventions. In this case, an operator who may perform remote intervention can prepare for the sudden increase in remote interventions, mitigating the burden caused by the sudden increase in remote interventions.

Note that the predetermined alert display instruction may be transmitted to an operator not executing the remote intervention process (also referred to as during the remote intervention). In this case, no alert display is generated for an operator during the remote intervention, thus enabling the operator to concentrate on the remote intervention.

The predetermined alert display instruction may be an instruction to display different content for each operator. For example, the configuration may be such that detailed information related to the sudden increase in remote interventions is notified to an operator who has not performed remote intervention and to an operator with a high skill level, and simple information related to the sudden increase in remote interventions is notified to an operator who has performed remote intervention and to an operator with a low skill level. With such a configuration, remote monitoring/control server 1 can appropriately notify the amount of information that the operator can process, in accordance with the operator's ability, state, or the like.

Note that the transmission time of the predetermined alert display instruction may be changed depending on the time remaining until the estimated time of the sudden increase in remote interventions. For example, by transmitting the predetermined alert display instruction 30 seconds before the time when the remote intervention occurs, alert display determiner 124 can display the alert at the appropriate timing for preparing for the sudden increase in remote interventions.

For example, alert display determiner 124 may determine the transmission time of the predetermined alert display instruction to be an earlier time as the number of vehicles to be remotely intervened increases. In this case, alert display determiner 124 enables remote operator terminal 31 to display the alert so that the operator can prepare for the sudden increase in remote interventions with greater time as the sudden increase-associated burden increases.

Storage 13 is formed, for example, of a semiconductor memory or the like and functions as control program storage 131, vehicle information storage 132, and operator information storage 133.

Control program storage 131 stores various programs for controlling remote monitoring/control server 1.

Vehicle information storage 132 stores in advance the identification number of each of the plurality of autonomous vehicles 21 to 2i.

As the identification number of each of autonomous vehicles 21 to 2i, various types of information can be used as long as each of the plurality of autonomous vehicles 21 to 2i can be identified individually. For example, as the identification numbers of autonomous vehicles 21 to 2i, the Internet Protocol addresses (IP addresses) of the plurality of autonomous vehicles 21 to 2i can be used, respectively.

For example, communicator 11 receives the vehicle information, the map information stored in map information storage 2151, and the route information stored in route information storage 2152 from each of autonomous vehicles 21 to 2i, and stores these pieces of information in vehicle information storage 132.

Operator information storage 133 stores in advance the identification numbers of the plurality of operators P1 to Pk and the identification numbers of the plurality of remote operator terminals 31 to 3j, respectively. As the identification number of each of the plurality of operators P1 to Pk, various types of information can be used as long as each of the plurality of operators P1 to Pk can be identified individually. For example, as the identification numbers of the plurality of operators P1 to Pk, identification numbers uniquely assigned to the plurality of operators P1 to Pk can be used, respectively. As the identification number of each of the plurality of remote operator terminals 31 to 3j, various types of information can be used as long as each of the plurality of remote operator terminals 31 to 3j can be identified individually. For example, as the identification numbers of the plurality of remote operator terminals 31 to 3j, the IP addresses of the plurality of remote operator terminals 31 to 3j can be used, respectively.

Operator information storage 133 may be configured to store the identification numbers of the plurality of remote operator terminals 31 to 3j used by the plurality of operators P1 to Pk, respectively. For example, operator information storage 133 may store the operator information by associating the identification number of the operator with the identification number of the remote operator terminal used by the operator.

The operator information is information related to each of operators P1 to Pk. The operator information includes, for example, information indicating the correspondence between the identification number of the operator and the identification number of the remote operator terminal used by the operator, information indicating the operator's skill level, and information indicating the operator's fatigue level.

This enables remote monitoring/control server 1 to display an alert to a specific operator via the remote operator terminal.

### <Autonomous Vehicle>

FIG. 3 is a block diagram illustrating an example of autonomous vehicle 21 illustrated in FIG. 1.

FIG. 3 illustrates only autonomous vehicle 21 among the plurality of autonomous vehicles 21 to 2i for simplified illustration. Autonomous vehicles 22 to 2i are also configured and operated in the same manner as autonomous vehicle 2No. In the following description, the configurations and operations of the plurality of autonomous vehicles 21 to 2i will be described using autonomous vehicle 21.

Autonomous vehicle 21 includes communicator 211, sensor 212, drive component 213, controller 214, storage 215, display 216, and service provider 217.

Controller 214 includes communication controller 2141 and travel controller 2142.

Storage 215 includes map information storage 2151, route information storage 2152, and control program storage 2153.

Note that the configuration of autonomous vehicle 21 is not particularly limited to this example. For example, some or all of the functions of remote monitoring/control server 1 may be included in autonomous vehicle 21.

Communicator 211 wirelessly communicates with remote monitoring/control server 1 and remote operator terminal 31 under the control of communication controller 2141, and transmits vehicle information including vehicle state information related to the vehicle body of autonomous vehicle 21, such as the vehicle speed, current location, and steering angle, as well as the surrounding environment information for autonomous vehicle 21 to remote monitoring/control server 1 and remote operator terminal 3No. Communicator 211 receives a command to perform the vehicle control to autonomous vehicle 21 from remote monitoring/control server No. Communicator 211 receives a command to remotely intervene in autonomous vehicle 21 from remote operator terminal 31.

Communicator 211 is implemented by, for example, a communication interface, a processor, and the like for wireless communication. The communication interface is implemented by, for example, an antenna, a wireless communication circuit, and the like.

In addition to a general wireless communication device, a wireless local area network (LAN), a cellular phone, a personal handy-phone system (PHS), or the like may be used for communicator 211.

Sensor 212 is formed, for example, of sensors such as a plurality of cameras to image the surroundings of autonomous vehicle 21, which are attached to the front, rear, right, and left sides of autonomous vehicle 21, respectively. Sensor 212 outputs information sensed around autonomous vehicle 21 to controller 214 and communicator 211 as surrounding environment information.

Note that sensor 212 is not particularly limited to the above example. As long as sensor 212 is configured to sense information about autonomous vehicle 21 and its surroundings, the mounting positions, number, and types of the sensors included in sensor 212 may be changed arbitrarily, for example. Sensor 212 may include, for example, an omnidirectional camera, a global positioning system (GPS) receiver, a light detection and ranging (LiDAR), a steering angle sensor, a vehicle speed sensor, an odometer, and/or an inertia sensor.

When autonomous vehicle 21 is an engine vehicle, drive component 213 includes, for example, an engine and a transmission. When autonomous vehicle 21 is an electric vehicle (battery vehicle) in the narrow sense, drive component 213 includes, for example, a travel motor and a transmission. Both the engine and travel motor are started and stopped via an ignition switch. Moreover, drive component 213 also includes an accelerator device, a brake device, and a steering device, and accelerates, decelerates, and steers autonomous vehicle 21.

Controller 214 includes, for example, a processor such as a CPU, and functions as communication controller 2141 and travel controller 2142.

Communication controller 2141 controls communicator 211 and sensor 212.

Travel controller 2142 executes a travel program stored in control program storage 2153. Travel controller 2142 controls drive component 213 in accordance with the travel program, based on the route information stored in route information storage 2152, the surrounding environment information obtained by sensor 212, and the like.

Specifically, travel controller 2142 controls drive component 213 and the like to cause autonomous vehicle 21 to travel autonomously in the autonomous travel mode, or controls drive component 213 and the like to cause autonomous vehicle 21 to travel in the remote operation mode in accordance with the remote operation by remote operator terminal 31.

Travel controller 2142 detects the occurrence of the predetermined event in autonomous vehicle 21 based on the vehicle state information and the surrounding environment information, and transmits a remote intervention request requesting remote intervention to remote monitoring/control server 1 using communicator 211.

Storage 215 is formed, for example, of a semiconductor memory or the like and functions as map information storage 2151, route information storage 2152, and control program storage 2153.

Map information storage 2151 stores map information in advance.

The map information includes, for example, road data related to road links, intersection data related to intersections, data related to facilities, and feature data showing indications installed or formed on the road. The map information is used to generate route information to be used by autonomous vehicle 21 when traveling autonomously in the autonomous travel mode.

Route information storage 2152 stores route information indicating the route from the departure point to the destination of autonomous vehicle 21.

The route information is information that can be generated by an existing route generation program or the like. Autonomous vehicle 21 can obtain route information generated by an external server or the like by receiving the route information from the server. Autonomous vehicle 21 may include a predetermined route generation program and execute the route generation program, thereby generating route information and storing the information in route information storage 2152.

Control program storage 2153 stores in advance various programs necessary to control autonomous vehicle 21.

Display 216 includes, for example, a direction indicator and a speaker. For example, display 216 is used to notify pedestrians and other vehicles around autonomous vehicle 21 of the travel intention, vehicle information, and the like for autonomous vehicle 21 automatically or through remote intervention by operators P1 to Pk.

Service provider 217 is a mechanism used by autonomous vehicle 21 to provide a service. Service provider 217 corresponds, for example, to a door or the like when autonomous vehicle 21 provides a service for carrying people. Service provider 217 is operated automatically or through remote intervention by operators P1 to Pk, for example.

### <Remote Operator Terminal>

FIG. 4 is a block diagram illustrating an example of the configuration of remote operator terminal 31 illustrated in FIG. 1.

In FIG. 4, only remote operator terminal 31 among the plurality of remote operator terminals 31 to 3j is illustrated for simplified illustration. Each of remote operator terminal 32 to 3j is also configured and operates in the same manner as remote operator terminal 3No. In the following description, the configurations and operations of the plurality of remote operator terminals 31 to 3j will be described using remote operator terminal 3No. Remote operator terminal 31 will be described as being used by operator P1.

Remote operator terminal 31 illustrated in FIG. 4 includes communicator 311, outputter 312, input component 313, controller 314, and storage 315.

Note that the configuration of remote operator terminal 31 is not particularly limited to this example. The configuration may include some or all of the functions of remote monitoring/control server 1 in remote operator terminal 31.

Communicator 311 communicates with remote monitoring/control server 1 and receives an alert display instruction from remote monitoring/control server No. Communicator 311 communicates with remote monitoring/control server 1 and transmits remote intervention information to remote monitoring/control server 1.

Communicator 311 communicates with autonomous vehicle 21 and receives vehicle information from autonomous vehicle 21, including vehicle state information related to the vehicle body of autonomous vehicle 21, such as the vehicle speed, current location, and steering angle, as well as the surrounding environment information for autonomous vehicle 2No. Communicator 311 communicates with autonomous vehicle 21 and transmits a remote intervention instruction to autonomous vehicle 21.

Communicator 311 is implemented by, for example, a communication interface, a processor, and the like for wireless communication. For example, the communication interface is implemented by, for example, an antenna, a wireless communication circuit, and the like.

In addition to a general wireless communication device, a wireless LAN, a cellular phone, a PHS, or the like may be used for communicator 311.

Outputter 312 is formed of a display device such as a liquid crystal display, for example, and displays the vehicle information received from autonomous vehicle 21 via communicator 31No. The vehicle information includes the vehicle state information related to the vehicle body of autonomous vehicle 21, such as the vehicle speed, the current location, and the steering angle, as well as the surrounding environment information for autonomous vehicle 2No. Outputter 312 can display the vehicle state information and surrounding environment information using a known display method, and may simultaneously display the vehicle state information and surrounding environment information on one display or may display the respective pieces of information on separate displays, for example. When the surrounding environment information is information obtained by a plurality of sensors, outputter 312 may display each piece of sensor information separately, or may integrate all pieces of sensor information and display the integrated sensor information.

Outputter 312 displays a remote request alert received from autonomous vehicle 21 via communicator 311, and a remote intervention sudden increase alert received from remote monitoring/control server 1 via communicator 311.

Input component 313 is formed, for example, of a user interface such as a keyboard, a mouse, and/or a joystick, and is used by operator P1 to perform various remote interventions. Operator P1 inputs, for example, the vehicle speed, a commanded operating amount specifying the operating amount, and other parameters of autonomous vehicle 21 via input component 313, as a remote intervention instruction to remotely intervene in autonomous vehicle 21.

Note that input component 313 may be formed of components used in the same operating environment as when the vehicle is actually operated, such as a steering wheel, brake, and accelerator. In this case, operator P1 can input travel instructions as if he or she were actually driving the vehicle.

Controller 314 is formed, for example, of a processor such as a CPU, and controls communicator 311, outputter 312, and input component 313.

Storage 315 is formed, for example, of a semiconductor memory or the like and stores various pieces of information such as a remote intervention application program for remote intervention to autonomous vehicle 21, information received from autonomous vehicle 21, and information input from operator P1. Controller 314 executes, for example, the remote intervention application program stored in storage 315, and controls communicator 311, outputter 312, input component 313, and the like, thereby performing various controls of remote operator terminal 31.

Operator P1 remotely intervenes in autonomous vehicle 21, for example, using input component 313 while confirming the information displayed on outputter 312. Communicator 311 transmits the remote intervention instruction input by input component 313 to, for example, autonomous vehicle 21 under the control of controller 314.

### <Examples>

Subsequently, specific examples of processes executed by remote intervention vehicle count transition estimator 121, remote intervention sudden increase determiner 122, and vehicle control determiner 123 will be described.

FIG. 5 illustrates an example of vehicle information for each of autonomous vehicles 21 to 2i when the current time is set to time 0.

In this example, remote intervention vehicle count transition estimator 121 has estimated that remote intervention 51 will occur in autonomous vehicle 21 due to traveling on a narrow road. Remote intervention vehicle count transition estimator 121 has estimated that remote intervention 52 will occur in autonomous vehicle 22 due to the approach of pedestrians. Remote intervention vehicle count transition estimator 121 has estimated that remote intervention 53 will occur in autonomous vehicle 23 due to the crossing of a pedestrian crossing. Remote intervention vehicle count transition estimator 121 has estimated that no remote intervention will occur in autonomous vehicles 24 to 2i.

FIG. 6 is an example of the remote intervention information estimated by remote intervention vehicle count transition estimator 121 in the example illustrated in FIG. 5.

In this example, remote intervention vehicle count transition estimator 121 has estimated that remote intervention 51 will be performed from remote intervention start 61A, 0.1 minutes later, to remote intervention end 61B, 1.0 minutes later. Remote intervention vehicle count transition estimator 121 has estimated that remote intervention 52 will be performed from remote intervention start 62A, 0.2 minutes later, to remote intervention end 62B, 0.7 minutes later. Remote intervention vehicle count transition estimator 121 has estimated that remote intervention 53 will be performed from remote intervention start 63A, 0.3 minutes later, to remote intervention end 63B, 0.8 minutes later.

FIG. 7 illustrates a specific example in which remote intervention sudden increase determiner 122 determines that there will be a sudden increase in remote interventions in the example illustrated in FIG. 6.

As an example, when the above predetermined time is 0.3 minutes and the above predetermined first threshold is three vehicles, remote intervention starts 61A, 62A, 63A are present within the predetermined time, from 0.1 minutes later to 0.4 minutes later. In this case, remote intervention sudden increase determiner 122 determines that there will be a sudden increase in remote interventions because, among autonomous vehicles 21 to 2i, the increase in the number of vehicles that will be remotely intervened within the predetermined time is three, which is greater than or equal to the predetermined first threshold.

FIG. 8 illustrates a specific example in which vehicle control determiner 123 determines the vehicle control for avoiding the sudden increase in remote interventions in the example of the sudden increase in remote interventions illustrated in FIG. 7.

In this example, since the predetermined first threshold is three vehicles and the increase in the number of vehicles among autonomous vehicles 21 to 2i that will be remotely intervened within the predetermined time is three, the minimum number of vehicles necessary to perform the vehicle control to avoid the sudden increase in remote interventions is one. Therefore, to avoid the sudden increase in remote interventions, a vehicle control instruction to perform a temporary stop is transmitted to one autonomous vehicle.

When the autonomous vehicle to perform the vehicle control is selected in order of the late start time for remote intervention, in this example, autonomous vehicle 23 is selected as the autonomous vehicle to perform the vehicle control.

When the vehicle control that performs a temporary stop for the shortest time necessary to avoid the sudden increase in remote interventions is performed as the predetermined vehicle control, in this example, the shortest time necessary to avoid the sudden increase in remote interventions is the length of time that causes remote intervention start 73A of autonomous vehicle 23 to occur at a time after the lapse of the predetermined time from remote intervention start 61A, and is calculated to be 0.1 minutes to cause remote intervention start 63A, predicted by remote intervention vehicle count transition estimator 121, to occur with a delay as remote intervention start 73A.

When autonomous vehicle 23 can safely perform a 0.1-minute temporary stop, vehicle control determiner 123 transmits a vehicle control instruction for performing a 0.1-minute temporary stop to autonomous vehicle 23.

### [Procedure]

Next, a description will be given of a process for mitigating the burden on the operator caused by a sudden increase in remote interventions, performed by remote monitoring/control server 1 configured as described above.

FIG. 9 is a flowchart illustrating an example of the process for mitigating the burden on the operator caused by a sudden increase in remote interventions, performed by remote monitoring/control server 1.

First, with reference to vehicle information storage 132, the vehicle information, map information, and route information for each of autonomous vehicles 21 to 2i are obtained and output to remote intervention vehicle count transition estimator 121 (step S11).

Next, remote intervention vehicle count transition estimator 121 estimates the start time and end time of the remote intervention performed at a future time for each of the autonomous vehicles of the plurality of autonomous vehicles 21 to 2i from the vehicle information, map information, and route information for each of plurality of autonomous vehicles 21 to 2i, and calculates the number of vehicles to be remotely intervened at the future time as the number of autonomous vehicles 21 to 2i that will be remotely intervened simultaneously (step S12). Remote intervention vehicle count transition estimator 121 outputs the estimated number of vehicles to be remotely intervened at the future time to remote intervention sudden increase determiner 122.

Remote intervention sudden increase determiner 122 determines whether there will be a sudden increase in remote interventions by determining whether the number of vehicles to be remotely intervened will increase by more than a predetermined number within a predetermined time (step S13).

When a sudden increase in remote interventions is not predicted (NO in step S13), vehicle control determiner 123 determines that a vehicle control instruction or an alert display instruction will not be transmitted from alert display determiner 124 and terminates the process.

On the other hand, when a sudden increase in remote interventions is predicted (YES in step S13), vehicle control determiner 123 determines whether the sudden increase in remote interventions can be avoided through vehicle control (step S14). Specifically, vehicle control determiner 123 determines whether the sudden increase in remote interventions can be avoided through a predetermined vehicle control and whether the predetermined vehicle control can be performed on at least the required number of autonomous vehicles to avoid the sudden increase in remote interventions based on the estimated time of the sudden increase in remote interventions, the presence or absence of remote intervention for the autonomous vehicle at a time before or after the estimated time of the sudden increase in remote interventions, the vehicle information, the map information, and the route information.

When the sudden increase in remote interventions is determined to be avoidable through the vehicle control (YES in step S14), vehicle control determiner 123 creates a vehicle control instruction for each of autonomous vehicles 21 to 2i to perform the predetermined vehicle control to avoid the sudden increase in remote interventions (step S15), and transmits the vehicle control instruction to each of autonomous vehicles 21 to 2i using communicator 11 (step S16).

At this time, each of autonomous vehicles 21 to 2i that has received the vehicle control instruction via communicator 211 controls drive component 213 using travel controller 2142 to perform the vehicle control to avoid the sudden increase in remote interventions.

On the other hand, when the sudden increase in remote interventions is determined not to be avoidable through the vehicle control (NO in step S14), alert display determiner 124 creates an alert display instruction for notifying the sudden increase in remote interventions (step S17), and transmits the alert display instruction to each of remote operator terminals 31 to 3j using communicator 11 (step S18).

At this time, remote operator terminals 31 to 3j that have received the alert display instructions via communicators 311 display alerts on outputters 312 using controllers 314, and transmit the alerts to operators P1 to Pk.

As described above, when a sudden increase in remote interventions is predicted, remote monitoring/control server 1 creates a travel plan instruction for avoiding the sudden increase, and transmits the created instruction to the autonomous vehicle that needs to change its travel plan. Therefore, according to remote monitoring/control server 1, the sudden increase in remote interventions is avoided, and the occurrence of a situation where a plurality of remote intervention request alerts are generated decreases, thereby mitigating the burden on the operator caused by the sudden increase in remote interventions. As a result, when the operator performs remote monitoring for a long period of time or remote monitoring on a plurality of autonomous operations, it is possible to mitigate a decrease in the operator's concentration due to fatigue, achieving a situation where safe remote monitoring is easily performed.

### [Variations, etc.]

Note that the configuration may be such that the predetermined vehicle control is performed on a greater number of autonomous vehicles than the minimum number of vehicles necessary to avoid the sudden increase in remote interventions. For example, when the minimum number of vehicles necessary to avoid the sudden increase in remote interventions is one, the predetermined vehicle control is performed on two autonomous vehicles. This can reduce the frequency of situations where a sudden increase in remote interventions cannot be avoided as predicted. In this case, a preferable configuration is such that the number of vehicles on which the vehicle control is to be performed increases as the number of operators capable of remote intervention decreases or as the operators' fatigue levels increase.

The predetermined vehicle control may be an instruction to change the speed of the autonomous vehicle. For example, when the shortest temporary stop time necessary to avoid the sudden increase in remote interventions is 30 seconds, the travel speed of the autonomous vehicle is 1.0 m/s, and the length of the road to the predicted location of remote intervention is 30 m, vehicle control may be performed to change the travel speed of the autonomous vehicle to 0.5 m/s. Thus, even when the temporary stop of the autonomous vehicle is dangerous, the sudden increase in remote interventions can be safely avoided.

The predetermined vehicle control may be an instruction to change the route of the autonomous vehicle. For example, when the autonomous vehicle can reach the destination earlier by changing the route than by performing the vehicle control to stop or change the speed, changing the route may be instructed. This can avoid the sudden increase in remote interventions while preventing a decrease in the travel efficiency of the autonomous vehicle.

When the predetermined vehicle control is performed on a plurality of autonomous vehicles, the same or different vehicle control may be performed on each of the plurality of autonomous vehicles, may be performed.

The predetermined vehicle control may be determined, taking into account errors in the estimated time of the sudden increase in remote interventions, the determination of the presence or absence of remote intervention for the autonomous vehicle at a time before or after the estimated time of the sudden increase in remote interventions, the vehicle information, the map information, and the route information received from remote intervention sudden increase determiner 122. Specifically, when the predetermined vehicle control is a temporary stop, vehicle control may be performed to extend the temporary stop by a certain time, for example, 0.5 minutes, added to the shortest temporary stop time necessary to avoid the sudden increase in remote interventions, taking into account an error in the estimated time of the sudden increase in remote interventions. Therefore, it is possible to reduce the frequency of situations where a sudden increase in remote interventions cannot be avoided as predicted when errors are generated in the estimated time of the sudden increase in remote interventions, the presence or absence of remote intervention for the autonomous vehicle at a time before or after the estimated time of the sudden increase in remote interventions, the vehicle information, the map information, and the route information.

An autonomous vehicle capable of safely performing the vehicle control may be preferentially selected as the autonomous vehicle to perform the predetermined vehicle control. Specifically, when the vehicle control is a temporary stop, an autonomous vehicle with wider roads and/or fewer pedestrians and other vehicles therearound may be preferentially selected as the autonomous vehicle to perform the predetermined vehicle control. Parameters of the autonomous vehicle, such as small size, light weight, or slow travel speed, as well as past travel data, may be used as conditions for selecting the autonomous vehicle capable of safely performing the vehicle control.

An autonomous vehicle that has completed service provision may be preferentially selected as the autonomous vehicle to perform the predetermined vehicle control. This can avoid the sudden increase in remote interventions while preventing a decrease in the efficiency of providing the service.

An autonomous vehicle with a lower degree of influence on reducing overall driving efficiency may be preferentially selected as the autonomous vehicle to perform the predetermined vehicle control. Specifically, an autonomous vehicle requiring a shorter temporary stop time to avoid the sudden increase in remote interventions may be selected as the autonomous vehicle to perform the predetermined vehicle control. This can avoid the sudden increase in remote interventions while preventing a decrease in the efficiency of providing the service.

The time at which the predetermined vehicle control is performed may be a time at which the autonomous vehicle satisfies a situation suitable for performing the vehicle control. Specifically, when it is necessary to perform a temporary stop for one minute to avoid the sudden increase in remote interventions, the vehicle control instruction may be to perform a temporary stop for one minute upon the autonomous vehicle reaching a road with a broad width. This facilitates ensuring safety when the autonomous vehicle performs the vehicle control.

### [Effects, etc.]

As described above, the information processing method according to the embodiment is an information processing method performed in an information processing device, the method including: obtaining, for each of two or more autonomous mobile bodies, first information related to the autonomous mobile body (for example, S11); estimating, based on the first information, second information indicating a total number of two or more target autonomous mobile bodies beginning to be operated or monitored by a remote operator during a predetermined period, the two or more target autonomous mobile bodies being among the two or more autonomous mobile bodies (for example, S12); determining whether the total number indicated by the second information is greater than or equal to a predetermined value (for example, S13); and outputting, when the total number indicated by the second information is determined to be greater than or equal to the predetermined value (for example, YES in S13), at least one of third information for controlling one or more target autonomous mobile bodies among the two or more target autonomous mobile bodies or fourth information for providing the remote operator with notification (for example, S15 to S18).

An example of the information processing device is remote monitoring/control server No. Examples of the two or more autonomous mobile bodies are autonomous vehicles 21 to 2i. Examples of the remote operators are operators P1 to Pk using remote operator terminals 31 to 3j.

The first information is information related to the autonomous mobile bodies, and includes, for example, the vehicle state information, surrounding environment information, map information, and/or route information as described above.

The second information is information indicating the number of autonomous mobile bodies determined to require operation (more specifically, remote operation) or monitoring (more specifically, remote monitoring) by the remote operator during the predetermined period, that is, autonomous mobile bodies determined to require remote intervention.

In step S13, it is determined whether the total number indicated by the second information is greater than or equal to the predetermined value (for example, the predetermined first threshold), that is, whether there will be a sudden increase in the number of autonomous mobile bodies requiring remote intervention during the predetermined period.

The third information is, for example, the vehicle control instruction described above, and is information for causing the autonomous mobile body to temporarily stop.

The fourth information is, for example, the alert display instruction described above and is information for notifying the remote operator of a sudden increase in the number of autonomous mobile bodies requiring remote intervention during the predetermined period. The fourth information is output to a terminal (for example, one of remote operator terminals 31 to 3j), for example, and the remote operator is notified of the sudden increase by image and/or voice.

The predetermined period is, for example, the above predetermined time and is a period from a first time point to a second time point that are determined arbitrarily.

Thereby, for example, an instruction for avoiding the sudden increase is created as the third information, and the created instruction is transmitted to each of the autonomous mobile bodies, thereby avoiding the sudden increase in the number of remote interventions (operations or monitoring). For example, the fourth information including image information and/or voice information for alerting the remote operator is output to the terminal operated by the remote operator, and the remote operator is notified in advance of the timing of the sudden increase in the number of autonomous mobile bodies requiring remote intervention. Thereby, the remote operator can prepare in advance to respond to the sudden increase in remote interventions. As described above, the information processing method according to the embodiment can avoid a sudden increase in the number of autonomous mobile bodies requiring remote intervention, and notify the remote operator of such a sudden increase in advance, thereby mitigating the burden on the remote operator caused by the sudden increase in remote interventions.

For example, the first information includes at least one of: (1) fifth information related to a state and a surrounding environment of the autonomous mobile body; (2) sixth information related to an area in which the autonomous mobile body moves; or (3) seventh information related to a route along which the autonomous mobile body moves.

The fifth information is, for example, the vehicle information described above.

The sixth information is, for example, the map information described above.

The seventh information is, for example, the route information described above.

According to the above, the second information can be estimated with high accuracy.

For example, when the total number indicated by the second information is determined to be greater than or equal to the predetermined value (for example, YES in S13), it may be further determined based on the first information whether the predetermined control can be executed on the target autonomous mobile body (for example, S14). In this case, for example, in the outputting of at least one of the third information or the fourth information (for example, S15 through S18), when the predetermined control is determined to be executable on the one or more target autonomous mobile bodies (for example, YES in S14), the third information is output to the one or more target autonomous mobile bodies (S16), and when the predetermined control is determined not to be executable on the one or more target autonomous mobile bodies, the fourth information is output to a terminal for providing the remote operator with notification (S18).

According to this arrangement, when the autonomous mobile body can execute a predetermined control such as a temporary stop (for example, the predetermined vehicle control described above), the autonomous mobile body is caused to execute the predetermined control, so that the sudden increase in the number of autonomous mobile bodies requiring remote intervention can be prevented. The autonomous mobile body may not be able to perform a predetermined control such as a temporary stop, depending on its traveling location. In such a case, fourth information for alerting the remote operator is output to the terminal operated by the remote operator, and the remote operator is notified in advance of the timing of the sudden increase in the number of autonomous mobile bodies requiring remote intervention. Thereby, the remote operator can prepare in advance to respond to the sudden increase in remote interventions. Thus, the burden on the remote operator caused by the sudden increase in remote interventions can be mitigated.

For example, the predetermined value is at least 2. In this case, the information processing method according to the embodiment further includes: obtaining eighth information related to two or more remote operators including the remote operator; generating, based on the second information, ninth information indicating a result of determining which of the two or more remote operators is to operate or monitor the two or more target autonomous mobile bodies; and outputting the ninth information to a terminal for providing the two or more remote operators with notification. That is, based on the eighth information and the number of autonomous mobile bodies that will require remote intervention, it may be determined which operator will remotely intervene in which autonomous mobile body.

The eighth information is, for example, the operator information described above, and is, for example, information indicating which operator is using which terminal, information indicating the operator's skill level, and/or information including the operator's fatigue level.

The ninth information is information indicating the result of determining which remote operator is to remotely intervene in which target autonomous mobile body, that is, information indicating the operators' assignment for remote intervention.

Thereby, the information processing device determines which remote operator is assigned to respond to the autonomous mobile bodies requiring remote intervention, eliminating the need for the remote operators to make this determination among themselves, for example. Thus, the burden on the remote operator can be further mitigated.

For example, the third information includes at least one of: information for causing the one or more target autonomous mobile bodies to temporarily stop; information for causing the one or more target autonomous mobile bodies to change speeds; or information for causing the one or more target autonomous mobile bodies to change routes for travel.

Thereby, the sudden increase in the number of autonomous mobile bodies requiring remote intervention can be prevented suitably.

For example, the information processing method according to the embodiment further includes: generating, based on the first information, tenth information indicating, for each of the two or more target autonomous mobile bodies, a result of calculating at least one of (i) a degree of safety when the target autonomous mobile body executes a predetermined control, or (ii) a degree of influence on the two or more autonomous mobile bodies when the target autonomous mobile body executes the predetermined control; and determining the one or more target autonomous mobile bodies based on the tenth information. That is, the autonomous mobile body to execute the predetermined control may be determined based on at least one of: the degree of safety indicating how safely the autonomous mobile body can execute the predetermined control, or the degree of influence such as the occurrence of service delays when, for example, two or more autonomous mobile bodies provide the service by executing the predetermined control.

This can cause the autonomous mobile body to safely perform the predetermined control, and reduce the temporary stop time and the like caused by the sudden increase in remote interventions when the two or more autonomous mobile bodies are considered as a whole.

For example, in the determining of the one or more target autonomous mobile bodies, a target autonomous mobile body having a high calculated degree of safety among the two or more target autonomous mobile bodies is determined as the one or more target autonomous mobile bodies.

This can prevent a decrease in the safety of travel of the autonomous mobile bodies.

For example, in the determining of the one or more target autonomous mobile bodies, a target autonomous mobile body having a low calculated degree of influence among the two or more target autonomous mobile bodies is determined as the one or more target autonomous mobile bodies.

This can lead to a reduction in travel delays and the like due to the predetermined control when the two or more autonomous mobile bodies are considered as a whole.

For example, the fourth information includes at least one of information indicating the predetermined period or information related to the third information.

This enables the remote operator to grasp the timing of the sudden increase in remote interventions or the type of travel being performed by the autonomous mobile body.

An information processing device according to an embodiment of the present invention includes: an obtainer that obtains, for each of two or more autonomous mobile bodies, first information related to the autonomous mobile body; an estimator that estimates, based on the first information, second information indicating a total number of two or more target autonomous mobile bodies beginning to be operated or monitored by a remote operator during a predetermined period, the two or more target autonomous mobile bodies being among the two or more autonomous mobile bodies; a determiner that determines whether the total number indicated by the second information is greater than or equal to a predetermined value; and an outputter that outputs at least one of third information for controlling one or more target autonomous mobile bodies among the two or more target autonomous mobile bodies or fourth information for providing the remote operator with notification, when the total number indicated by the second information is determined to be greater than or equal to the predetermined value.

The obtainer and the estimator are, for example, implemented by remote intervention vehicle count transition estimator 12No. Remote intervention vehicle count transition estimator 121 obtains first information from, for example, storage 13 or the autonomous mobile body via communicator 11.

The determiner is, for example, implemented by remote intervention sudden increase determiner 122. The outputter is, for example, implemented by at least one of vehicle control determiner 123 or alert display determiner 124. At least one of vehicle control determiner 123 or alert display determiner 124 outputs at least one of the third information or the fourth information to at least one of the target autonomous mobile body or the terminal via communicator 11.

This provides a similar effect to that of the information processing device according to the embodiment.

The present disclosure may be implemented as a program that causes a computer to execute the information processing method. Specifically, a program according to one aspect of the present disclosure is a program for the computer to execute an information processing method including: obtaining, for each of two or more autonomous mobile bodies, first information related to the autonomous mobile body; estimating, based on the first information, second information indicating a total number of two or more target autonomous mobile bodies beginning to be operated or monitored by a remote operator during a predetermined period, the two or more target autonomous mobile bodies being among the two or more autonomous mobile bodies; determining whether the total number indicated by the second information is greater than or equal to a predetermined value; and outputting at least one of third information for controlling one or more target autonomous mobile bodies among the two or more target autonomous mobile bodies or fourth information for providing the remote operator with notification, when the total number indicated by the second information is determined to be greater than or equal to the predetermined value.

This provides a similar effect to that of the information processing device according to the embodiment.

### (Other Embodiments)

Although the embodiment has been described above, the present disclosure is not limited to the above embodiment.

For example, from the viewpoint of service quality, when vehicle control (for example, temporary stop and/or deceleration, etc.) is performed by determining whether there will be a sudden increase in remote interventions, the vehicle control instruction may also include, for example, the timing of the travel start and/or acceleration for returning the travel mode of the autonomous mobile body to its original travel mode.

Note that remote intervention sudden increase determiner 122 may change (determine) the predetermined first threshold based on the service quality of the service provided by the autonomous vehicles. For example, remote intervention sudden increase determiner 122 may adjust to decrease the first threshold so that a sudden increase can be more easily determined when service quality does not deteriorate, assuming that the predetermined vehicle control is performed to avoid a sudden increase in remote interventions (for example, when there is no delay in the delivery completion time in the case of a product delivery service). For example, in the product delivery service, in a state where all vehicles have completed their commodity deliveries and are returning to the hangar, remote intervention sudden increase determiner 122 decreases the predetermined first threshold because the service quality does not deteriorate when the predetermined vehicle control is performed to avoid a sudden increase in remote interventions.

This can mitigate the burden on the operator while maintaining the service quality.

When vehicle control is performed based on the determination of a sudden increase in remote interventions, the vehicle control content may be determined to maintain the service quality. For example, when the autonomous mobile body performs the product delivery service, vehicle control determiner 123 calculates the respective delivery delay times for the case where the route of the autonomous mobile body is changed and the case where the autonomous mobile body is temporarily stopped, and adopts the vehicle control with the shorter calculated delivery delay time. For example, when each autonomous mobile body executes the product delivery service, vehicle control determiner 123 preferentially performs the vehicle control on an autonomous mobile body that is not delivering a product and is out of service, rather than an autonomous mobile body that is delivering a product. The service information related to the service, such as the service content of the autonomous mobile body and whether the service is being executed, may be obtained, for example, from the autonomous mobile body or the user interface or the like of the terminal operated by the operator.

For example, vehicle control may be performed to improve the service quality within a range in which a sudden increase in remote interventions is not determined. For example, vehicle control determiner 123 may determine the vehicle control content so that the autonomous mobile body reaches the destination earlier by accelerating the autonomous mobile body and/or generating a route change instruction to change to a shorter route than the original route, such as taking a shortcut.

For example, in the above embodiment, processing executed by a specific processing unit may be executed by another processing unit. The order of a plurality of processes may be changed, or a plurality of processes may be executed in parallel.

For example, in the above embodiment, each component of the processing unit such as controller 12 may be implemented by executing a software program suitable for each component. Each of the components may be achieved by a program execution unit, such as a CPU or a processor, reading and executing a software program recorded on a recording medium such as a hard disk or a semiconductor memory.

Each of the components may be implemented by hardware. Each of the component may be a circuit (or integrated circuit). These circuits may constitute one circuit as a whole or may be separate circuits. Each of these circuits may be a general-purpose circuit or a dedicated circuit.

The general or specific aspects of the present disclosure may be implemented using a system, a device, a method, an integrated circuit, a computer program, or a computer-readable recording medium such as a compact disc read-only memory (CD-ROM). The above aspects may be implemented by any combination of systems, methods, devices integrated circuits, computer programs, and recording media.

For example, the present disclosure may be implemented as an information processing method, as a program for causing a computer to execute the information processing method, or as a non-temporary recording medium readable by a computer on which such a program is recorded.

For example, the information processing device (remote monitoring/control server 1) may be implemented as a single device such as an information terminal or a plurality of devices. When the information processing device is implemented by a plurality of devices, the components included in remote monitoring/control server 1 described in the above embodiment may be allocated to the plurality of devices in any manner.

In addition, the present disclosure also includes a form obtained by applying various modifications to each embodiment that a person skilled in the art can conceive, or a form implemented by arbitrarily combining the components and functions in the embodiments without departing from the gist of the present disclosure.

### [Industrial Availability]

The information processing method according to the present disclosure is useful as a method executed by a control device used for remotely monitoring a plurality of autonomous vehicles.

### [Reference Signs List]

1 remote monitoring/control server
4 network
11, 211, 311 communicator
12, 214, 314 controller
121 remote intervention vehicle count transition estimator
122 remote intervention sudden increase determiner
123 vehicle control determiner
124 alert display determiner
13, 215, 315 storage
131 control program storage
132 vehicle information storage
133 operator information storage
21 to 2i autonomous vehicle
212 sensor
213 drive component
2141 communication controller
2142 travel controller
2151 map information storage
2152 route information storage
2153 control program storage
216 display
217 service provider
31 to 3j remote operator terminal
312 outputter
313 input component
51 to 53 remote intervention
61a, 62a, 63a, 73a remote intervention start
61b, 62b, 63b remote intervention end
p1 to pk operator

## Claims

1. An information processing method performed in an information processing device (1), the information processing method comprising:
obtaining (S11), for each of two or more autonomous mobile bodies (21 to 2i), first information related to the autonomous mobile body (21 to 2i);
**characterized in that**, the information processing method further comprises the steps of:
estimating (S12), based on the first information, second information indicating a total number of two or more target autonomous mobile bodies (21 to 2i) beginning to be operated or monitored by a remote operator (P1 to Pk), during a predetermined period, the two or more target autonomous mobile bodies (21 to 2i) being among the two or more autonomous mobile bodies (21 to 2i);
determining (S13) whether the total number indicated by the second information is greater than or equal to a predetermined value; and
outputting (S15 to S18) at least one of third information for controlling one or more target autonomous mobile bodies (21 to 2i) among the two or more target autonomous mobile bodies (21 to 2i) or fourth information for providing the remote operator (P1 to Pk) with notification, when the total number indicated by the second information is determined to be greater than or equal to the predetermined value.

2. The information processing method according to claim 1,
wherein the first information obtained for each of two or more autonomous mobile bodies (21 to 2i) includes at least one of:
(1) fifth information related to a state and a surrounding environment of the autonomous mobile body (21 to 2i);
(2) sixth information related to an area in which the autonomous mobile body (21 to 2i) moves; or
(3) seventh information related to a route along which the autonomous mobile body (21 to 2i) moves.

3. The information processing method according to claim 1, further comprising:
determining, based on the first information, whether a predetermined control is executable on the one or more target autonomous mobile bodies (21 to 2i) when the total number indicated by the second information is determined to be greater than or equal to a predetermined value,
wherein in the outputting of the at least one of the third information or the fourth information,
the third information is output to the one or more target autonomous mobile bodies (21 to 2i) when the predetermined control is determined to be executable on the one or more target autonomous mobile bodies (21 to 2i), and
the fourth information is output to a remote operator (P1 to Pk) terminal (31 to 3j) for providing the remote operator (P1 to Pk) with notification when the predetermined control is determined not to be executable on the one or more target autonomous mobile bodies (21 to 2i).

4. The information processing method according to claim 1,
wherein the predetermined value is at least 2, and
the information processing method further comprises:
obtaining eighth information related to two or more remote operators (P1 to Pk) including the remote operator (P1 to Pk);
generating, based on the second information, ninth information indicating a result of determining which of the two or more remote operators (P1 to Pk) is to operate or monitor the two or more target autonomous mobile bodies (21 to 2i); and
outputting the ninth information to a remote operator (P1 to Pk) terminal (31 to 3j) for providing the two or more remote operators (P1 to Pk) with notification.

5. The information processing method according to claim 1,
wherein the third information includes at least one of: information for causing the one or more target autonomous mobile bodies (21 to 2i) to temporarily stop; information for causing the one or more target autonomous mobile bodies (21 to 2i) to change speeds; or information for causing the one or more target autonomous mobile bodies (21 to 2i) to change routes for travel.

6. The information processing method according to claim 1, further comprising:
generating, based on the first information, tenth information indicating, for each of the two or more target autonomous mobile bodies (21 to 2i), a result of calculating at least one of (i) a degree of safety when the target autonomous mobile body (21 to 2i) executes a predetermined control, or (ii) a degree of influence on the two or more autonomous mobile bodies (21 to 2i) when the target autonomous mobile body (21 to 2i) executes the predetermined control; and
determining the one or more target autonomous mobile bodies (21 to 2i) based on the tenth information.

7. The information processing method according to claim 6,
wherein in the determining of the one or more target autonomous mobile bodies (21 to 2i), a target autonomous mobile body (21 to 2i) having a high calculated degree of safety among the two or more target autonomous mobile bodies (21 to 2i) is determined as the one or more target autonomous mobile bodies (21 to 2i).

8. The information processing method according to claim 6,
wherein in the determining of the one or more target autonomous mobile bodies (21 to 2i), a target autonomous mobile body (21 to 2i) having a low calculated degree of influence among the two or more target autonomous mobile bodies (21 to 2i) is determined as the one or more target autonomous mobile bodies (21 to 2i).

9. The information processing method according to any one of claims 1 to 8,
wherein the fourth information includes at least one of information indicating the predetermined period or information related to the third information.

10. An information processing device (1) comprising:
an obtainer (11) configured to obtain (S11), for each of two or more autonomous mobile bodies (21 to 2i), first information related to the autonomous mobile body (21 to 2i);
**characterized in that**, the information processing device further comprises:
an estimator (121) configured to estimate (S12), based on the first information, second information indicating a total number of two or more target autonomous mobile bodies (21 to 2i) beginning to be operated or monitored by a remote operator (P1 to Pk), during a predetermined period, the two or more target autonomous mobile bodies (21 to 2i) being among the two or more autonomous mobile bodies (21 to 2i);
a determiner (122) configured to determine (S13) whether the total number indicated by the second information is greater than or equal to a predetermined value; and
an outputter (123) configured to output (S15 to S18) at least one of third information for controlling one or more target autonomous mobile bodies (21 to 2i) among the two or more target autonomous mobile bodies (21 to 2i) or fourth information for providing the remote operator (P1 to Pk) with notification, when the total number indicated by the second information is determined to be greater than or equal to the predetermined value.

11. A remote control system, comprising an information processing device (1) according to claim 10, a plurality of autonomous vehicles and a plurality of remote operator (P1 to Pk) terminals (31 to 3j), communicatively connected via a network (4).

12. An autonomous mobile body (21 to 2i) comprising an information processing device (1) according to claim 10.

13. A remote operator (P1 to Pk) terminal (31 to 3j) comprising an information processing device (1) according to claim 10.

14. A program product for causing a computer to execute the information processing method according to any one of claims 1 to 9.

15. A computer-readable recording medium comprising instructions which, when executed by a computer, cause the computer to carry out the steps of the information processing method according to any one of claims 1 to 9.

## Patentansprüche

1. Informationsverarbeitungsverfahren, das in einer Informationsverarbeitungsvorrichtung (1) durchgeführt wird, wobei das Informationsverarbeitungsverfahren umfasst:
Erhalten (S11), für jeden von zwei oder mehr autonomen mobilen Körpern (21 bis 2i), erster Informationen, die den autonomen mobilen Körper (21 bis 2i) betreffen;
**dadurch gekennzeichnet, dass** das Informationsverarbeitungsverfahren ferner die folgenden Schritte umfasst:
Schätzen (S12), auf der Grundlage der ersten Informationen, zweiter Informationen, die eine Gesamtanzahl von zwei oder mehr autonomen mobilen Zielkörpern (21 bis 2i) angeben, die beginnen, von einem Remote-Operator (P1 bis Pk) während eines vorbestimmten Zeitraums bedient oder überwacht zu werden, wobei die zwei oder mehr autonomen mobilen Zielkörper (21 bis 2i) sich unter den zwei oder mehr autonomen mobilen Körpern (21 bis 2i) befinden;
Bestimmen (S13), ob die Gesamtanzahl, die von den zweiten Informationen angegeben wird, größer oder gleich einem vorbestimmten Wert ist; und
Ausgeben (S15 bis S18) mindestens eines von dritten Informationen zum Steuern eines oder der mehrerer autonomer mobiler Zielkörper (21 bis 2i) unter den zwei oder mehr autonomen mobilen Zielkörpern (21 bis 2i) oder vierten Informationen zum Bereitstellen einer Benachrichtigung für den Remote-Operator (P1 bis Pk), wenn bestimmt wird, dass die Gesamtanzahl, die von den zweiten Informationen angegeben wird, größer oder gleich dem vorbestimmten Wert ist.

2. Informationsverarbeitungsverfahren nach Anspruch 1,
wobei die ersten Informationen, die für jeden von zwei oder mehr autonomen mobilen Körpern (2i bis 2i) erhalten werden, mindestens eines umfassen von:
(1) fünften Informationen, die einen Zustand und eine Umgebung des autonomen mobilen Körpers (21 bis 2i) betreffen;
(2) sechsten Informationen, die einen Bereich betreffen, in dem sich der autonome mobile Körper (21 bis 2i) bewegt; oder
(3) siebten Informationen, die eine Route betreffen, entlang der sich der autonome mobile Körper (21 bis 2i) bewegt.

3. Informationsverarbeitungsverfahren nach Anspruch 1, ferner umfassend:
Bestimmen, auf der Grundlage der ersten Informationen, ob eine vorbestimmte Steuerung auf dem einen oder den mehreren autonomen mobilen Zielkörpern (21 bis 2i) ausführbar ist, wenn bestimmt wird, dass die Gesamtanzahl, die von den zweiten Informationen angegeben wird, größer oder gleich einem vorbestimmten Wert ist,
wobei beim Ausgeben der mindestens einen von den dritten Informationen oder den vierten Informationen,
die dritten Informationen an den einen oder die mehreren autonomen mobilen Zielkörper (21 bis 2i) ausgegeben werden, wenn bestimmt wird, dass die vorbestimmte Steuerung auf dem einen oder den mehreren autonomen mobilen Zielkörpern (21 bis 2i) ausführbar ist, und
die vierten Informationen an ein Endgerät (31 bis 3j) des Remote-Operators (P1 bis Pk) ausgegeben werden, um dem Remote-Operator (P1 bis Pk) eine Benachrichtigung bereitzustellen, wenn bestimmt wird, dass die vorbestimmte Steuerung nicht auf dem einen oder den mehreren autonomen mobilen Zielkörpern (21 bis 2i) ausführbar ist.

4. Informationsverarbeitungsverfahren nach Anspruch 1,
wobei der vorbestimmte Wert mindestens 2 beträgt, und
das Informationsverarbeitungsverfahren ferner umfasst:
Erhalten achter Informationen, die zwei oder mehr Remote-Operatoren (P1 bis Pk) betreffen, die den Remote-Operator (P1 bis Pk) umfassen;
Erzeugen, auf der Grundlage der zweiten Informationen, neunter Informationen, die ein Ergebnis des Bestimmens angeben, welcher der zwei oder mehr Remote-Operatoren (P1 bis Pk) die zwei oder mehr autonomen mobilen Zielkörper (21 bis 2i) bedienen oder überwachen soll; und
Ausgeben der neunten Informationen an ein Endgerät (31 bis 3j) eines Remote-Operators (P1 bis Pk), um den zwei oder mehr Remote-Operatoren (P1 bis Pk) eine Benachrichtigung bereitzustellen.

5. Informationsverarbeitungsverfahren nach Anspruch 1,
wobei die dritten Informationen mindestens eines umfassen von: Informationen, um den einen oder die mehreren autonomen mobilen Zielkörper (21 bis 2i) zu veranlassen, zeitweilig anzuhalten; Informationen, um den einen oder die mehreren autonomen mobilen Zielkörper (21 bis 2i) zu veranlassen, ihre Geschwindigkeiten zu ändern; oder Informationen, um den einen oder die mehreren autonomen mobilen Zielkörper (21 bis 2i) zu veranlassen, ihre Routen zum Fahren zu ändern.

6. Informationsverarbeitungsverfahren nach Anspruch 1, ferner umfassend:
Erzeugen, auf der Grundlage der ersten Informationen, zehnter Informationen, die, für jeden der zwei oder mehr autonomen mobilen Zielkörper (21 bis 2i), ein Ergebnis des Berechnens mindestens eines von (i) einem Grad an Sicherheit, wenn der autonome mobile Zielkörper (21 bis 2i) eine vorbestimmte Steuerung ausführt, oder (ii) einen Grad an Einfluss auf die zwei oder mehr autonomen mobilen Körper (21 bis 2i) angeben, wenn der autonome mobile Zielkörper (21 bis 2i) die vorbestimmte Steuerung ausführt; und
Bestimmen des einen oder der mehreren autonomen mobilen Zielkörper (21 bis 2i) auf der Grundlage der zehnten Informationen.

7. Informationsverarbeitungsverfahren nach Anspruch 6,
wobei beim Bestimmen des einen oder der mehreren autonomen mobilen Zielkörper (21 bis 2i) ein autonomer mobiler Zielkörper (21 bis 2i), der einen hohen berechneten Grad an Sicherheit unter den zwei oder mehr autonomen mobilen Zielkörpern (21 bis 2i) aufweist, als der eine oder die mehreren autonomen mobilen Zielkörper (21 bis 2i) bestimmt wird.

8. Informationsverarbeitungsverfahren nach Anspruch 6,
wobei beim Bestimmen des einen oder der mehreren autonomen mobilen Zielkörper (21 bis 2i) ein autonomer mobiler Zielkörper (21 bis 2i), der einen niedrigen berechneten Grad an Einfluss unter den zwei oder mehr autonomen mobilen Zielkörpern (21 bis 2i) aufweist, als der eine oder die mehreren autonomen mobilen Zielkörper (21 bis 2i) bestimmt wird.

9. Informationsverarbeitungsverfahren nach einem der Ansprüche 1 bis 8,
wobei die vierten Informationen mindestens eines von Informationen, die den vorbestimmten Zeitraum angeben, oder Informationen umfassen, welche die dritten Informationen betreffen.

10. Informationsverarbeitungsvorrichtung (1), umfassend:
eine Erhalteeinrichtung (11), die dazu ausgestaltet ist, für jeden von zwei oder mehr autonomen mobilen Körpern (21 bis 2i), erste Informationen zu erhalten (S11), die den autonomen mobilen Körper (21 bis 2i) betreffen;
**dadurch gekennzeichnet, dass** die Informationsverarbeitungsvorrichtung ferner umfasst:
eine Schätzeinrichtung (121), die dazu ausgestaltet ist, auf der Grundlage der ersten Informationen, zweite Informationen zu schätzen (S12), die eine Gesamtanzahl von zwei oder mehr autonomen mobilen Zielkörpern (21 bis 21) angeben, die beginnen, von einem Remote-Operator (P1 bis Pk) während eines vorbestimmten Zeitraums bedient oder überwacht zu werden, wobei die zwei oder mehr autonomen mobilen Zielkörper (21 bis 2i) sich unter den zwei oder mehr autonomen mobilen Körpern (21 bis 2i) befinden;
eine Bestimmungseinrichtung (122), die dazu ausgestaltet ist, zu bestimmen (S13), ob die Gesamtanzahl, die von den zweiten Informationen angegeben wird, größer oder gleich einem vorbestimmten Wert ist; und
eine Ausgabeeinrichtung (123), die dazu ausgestaltet ist, mindestens eines von dritten Informationen zum Steuern eines oder der mehrerer autonomer mobiler Zielkörper (21 bis 2i) unter den zwei oder mehr autonomen mobilen Zielkörpern (21 bis 2i) oder vierten Informationen zum Bereitstellen einer Benachrichtigung für den Remote-Operator (P1 bis Pk) auszugeben (S15 bis S18), wenn bestimmt wird, dass die Gesamtanzahl, die von den zweiten Informationen angegeben wird, größer oder gleich dem vorbestimmten Wert ist.

11. Fernsteuerungssystem, das eine Informationsverarbeitungsvorrichtung (1) nach Anspruch 10, eine Vielzahl von autonomen Fahrzeugen und eine Vielzahl von Endgeräten (31 bis 3j) von Remote-Operatoren (P1 bis Pk) umfasst, die kommunikativ über ein Netzwerk (4) verbunden sind.

12. Autonomer mobiler Körper (21 bis 2i), der eine Informationsverarbeitungsvorrichtung (1) nach Anspruch 10 umfasst.

13. Endgerät (31 bis 3j) für Remote-Operatoren (P1 bis Pk), das eine Informationsverarbeitungsvorrichtung (1) nach Anspruch 10 umfasst.

14. Programmprodukt zum Veranlassen eines Computers, das Informationsverarbeitungsverfahren nach einem der Ansprüche 1 bis 9 auszuführen.

15. Computerlesbarer Datenträger, der Anweisungen umfasst, die, wenn sie von einem Computer ausgeführt werden, den Computer veranlassen, die Schritte des Informationsverarbeitungsverfahrens nach einem der Ansprüche 1 bis 9 durchzuführen.

## Revendications

1. Procédé de traitement d'informations réalisé dans un dispositif de traitement d'informations (1), le procédé de traitement d'informations comprenant l'étape suivante :
pour chacun de deux corps mobiles autonomes ou plus (21 à 2i), obtenir (S11) des premières informations liées au corps mobile autonome (21 à 2i) ;
**caractérisé en ce que** le procédé de traitement d'informations comprend en outre les étapes suivantes :
sur la base des premières informations, estimer (S12) des deuxièmes informations indiquant un nombre total de deux corps mobiles autonomes ou plus (21 à 2i) cibles commençant à être actionnés ou surveillés par un opérateur distant (P1 à Pk) pendant une période prédéterminée, les deux corps mobiles autonomes ou plus (21 à 2i) cibles faisant partie des deux corps mobiles autonomes ou plus (21 à 2i) ;
déterminer (S13) si le nombre total indiqué par les deuxièmes informations est supérieur ou égal à une valeur prédéterminée ; et
délivrer (S15 à S18) des troisièmes informations pour commander un ou plusieurs corps mobiles autonomes (21 à 2i) cibles parmi les deux corps mobiles autonomes ou plus (21 à 2i) cibles et/ou des quatrièmes informations pour fournir une notification à l'opérateur distant (P1 à Pk), lorsqu'il est déterminé que le nombre total indiqué par les deuxièmes informations est supérieur ou égal à la valeur prédéterminée.

2. Procédé de traitement d'informations selon la revendication 1,
dans lequel les premières informations obtenues pour chacun de deux corps mobiles autonomes ou plus (21 à 2i) comportent au moins des informations parmi :
(1) des cinquièmes informations liées à un état et à un environnement autour du corps mobile autonome (21 à 2i) ;
(2) des sixièmes informations liées à une zone dans laquelle se déplace le corps mobile autonome (21 à 2i) ; ou
(3) des septièmes informations liées à un itinéraire le long duquel se déplace le corps mobile autonome (21 à 2i).

3. Procédé de traitement d'informations selon la revendication 1, comprenant en outre les étapes suivantes :
sur la base des premières informations, déterminer si une commande prédéterminée est exécutable sur les un ou plusieurs corps mobiles autonomes (21 à 2i) cibles lorsqu'il est déterminé que le nombre total indiqué par les deuxièmes informations est supérieur ou égal à une valeur prédéterminée,
dans lequel, lors de la sortie des troisièmes informations et/ou des quatrièmes informations,
les troisièmes informations sont délivrées à un ou plusieurs corps mobiles autonomes (21 à 2i) cibles lorsqu'il est déterminé que la commande prédéterminée est exécutable sur les un ou plusieurs corps mobiles autonomes (21 à 2i) cibles, et
les quatrièmes informations sont délivrées à un terminal (31 à 3j) d'opérateur distant (P1 à Pk) pour fournir une notification à l'opérateur distant (P1 à Pk) lorsqu'il est déterminé que la commande prédéterminée n'est pas exécutable sur les un ou plusieurs corps mobiles autonomes (21 à 2i) cibles.

4. Procédé de traitement d'informations selon la revendication 1,
dans lequel la valeur prédéterminée est au moins 2, et
le procédé de traitement d'informations comprend en outre les étapes suivantes :
obtenir des huitièmes informations liées à deux opérateurs distants ou plus (P1 à Pk) comportant l'opérateur distant (P1 à Pk) ;
sur la base des deuxièmes informations, générer des neuvièmes informations indiquant un résultat de la détermination de celui ou ceux parmi les deux opérateurs distants ou plus (P1 à Pk) devant actionner ou surveiller les deux corps mobiles autonomes ou plus (21 à 2i) cibles ; et
délivrer les neuvièmes informations à un terminal (31 à 3j) d'opérateur distant (P1 à Pk) pour fournir une notification aux deux opérateurs distants ou plus (P1 à Pk).

5. Procédé de traitement d'informations selon la revendication 1, dans lequel les troisièmes informations comportent au moins des informations parmi : des informations pour amener les un ou plusieurs corps mobiles autonomes (21 à 2i) cibles à s'arrêter temporairement ; des informations pour amener les un ou plusieurs corps mobiles autonomes (21 à 2i) cibles à modifier les vitesses ; ou des informations pour amener les un ou plusieurs corps mobiles autonomes (21 à 2i) cibles à modifier les itinéraires de déplacement.

6. Procédé de traitement d'informations selon la revendication 1, comprenant en outre :
sur la base des premières informations, générer des dixièmes informations indiquant pour chacun des deux corps mobiles autonomes ou plus (21 à 2i) cibles un résultat du calcul d'au moins un parmi (i) un degré de sécurité lorsque le corps mobile autonome (21 à 2i) cible exécute une commande prédéterminée, ou (ii) un degré d'influence sur les deux corps mobiles autonomes ou plus (21 à 2i) lorsque le corps mobile autonome (21 à 2i) cible exécute la commande prédéterminée ; et
déterminer les un ou plusieurs corps mobiles autonomes (21 à 2i) cibles sur la base des dixièmes informations.

7. Procédé de traitement d'informations selon la revendication 6,
dans lequel, lors de la détermination des un ou plusieurs corps mobiles autonomes (21 à 2i) cibles, un corps mobile autonome (21 à 2i) cible ayant un degré de sécurité calculé élevé parmi les deux corps mobiles autonomes ou plus (21 à 2i) cibles est déterminé comme étant les un ou plusieurs corps mobiles autonomes (21 à 2i) cibles.

8. Procédé de traitement d'informations selon la revendication 6, dans lequel, lors de la détermination des un ou plusieurs corps mobiles autonomes (21 à 2i) cibles, un corps mobile autonome (21 à 2i) cible ayant un degré d'influence calculé faible parmi les deux corps mobiles autonomes ou plus (21 à 2i) cibles est déterminé comme étant les un ou plusieurs corps mobiles autonomes (21 à 2i) cibles.

9. Procédé de traitement d'informations selon l'une des revendications 1 à 8,
dans lequel les quatrièmes informations comportent des informations indiquant la période prédéterminée et/ou des informations liées aux troisièmes informations.

10. Dispositif de traitement d'informations (1) comprenant :
un dispositif d'obtention (11) configuré pour, pour chacun de deux corps mobiles autonomes ou plus (21 à 2i), obtenir (S11) des premières informations liées au corps mobile autonome (21 à 2i) ;
**caractérisé en ce que** le dispositif de traitement d'informations comprend en outre :
un estimateur (121) configuré pour, sur la base des premières informations, estimer (S12) des deuxièmes informations indiquant un nombre total de deux corps mobiles autonomes ou plus (21 à 2i) cibles commençant à être actionnés ou surveillés par un opérateur distant (P1 à Pk) pendant une période prédéterminée, les deux corps mobiles autonomes ou plus (21 à 2i) cibles faisant partie des deux corps mobiles autonomes ou plus (21 à 2i) ;
un dispositif de détermination (122) configuré pour déterminer (S13) si le nombre total indiqué par les deuxièmes informations est supérieur ou égal à une valeur prédéterminée ; et
un dispositif de sortie (123) configuré pour délivrer (S15 à S18) des troisièmes informations pour commander un ou plusieurs corps mobiles autonomes (21 à 2i) cibles parmi les deux corps mobiles autonomes ou plus (21 à 2i) cibles et/ou des quatrièmes informations pour fournir une notification à l'opérateur distant (P1 à Pk), lorsqu'il est déterminé que le nombre total indiqué par les deuxièmes informations est supérieur ou égal à la valeur prédéterminée

11. Système de commande à distance comprenant un dispositif de traitement d'informations (1) selon la revendication 10, une pluralité de véhicules autonomes et une pluralité de terminaux (31 à 3j) d'opérateurs à distance (P1 à Pk), connectés en communication via un réseau (4).

12. Corps mobile autonome (21 à 2i) comprenant un dispositif de traitement d'informations (1) selon la revendication 10.

13. Terminal (31 à 3j) d'opérateur distant (P1 à Pk) comprenant un dispositif de traitement d'informations (1) selon la revendication 10.

14. Produit de programme pour amener un ordinateur à exécuter le procédé de traitement d'informations selon l'une des revendications 1 à 9.

15. Support d'enregistrement lisible par ordinateur comprenant des instructions qui, lorsqu'elles sont exécutées par un ordinateur, amènent l'ordinateur à mettre en œuvre les étapes du procédé de traitement d'informations selon l'une des revendications 1 à 9.
